# EUROPEAN PATENT APPLICATION

(11) **EP 2 911 262 A2**
(43) Date of publication of application: **26.08.2015**
(21) Application number: 15156866.4
(22) Date of filing: 22.10.2010
(51) Int. Cl.: H02J 3/38

(54) **Power distribution system**

(30) Priority: 06.11.2009 JP 2009255465; 16.11.2009 JP 2009261294
(62) Divisional of application: 10827971.2
(71) Applicant: Panasonic Intellectual Property Management Co., Ltd., Osaka 540-6207 (JP)
(72) Inventor: Koshin, Hiroaki, Osaka, 540-6207 (JP); Yoshitake, Akira, Osaka, 540-6207 (JP); Iwamatsu, Yuusuke, Osaka, 540-6207 (JP); Kawaguchi, Kei, Osaka, 540-6207 (JP)
(74) Representative: Müller-Boré & Partner Patentanwälte PartG mbB

(57) **Abstract**

Disclosed is a power distribution system equipped with: a DC electric power system for supplying a DC electric power to a DC load via a DC supply line; an AC power system for supplying an AC electric power from an AC power supply; and a battery which is connected to the DC supply line. The power distribution system is further equipped with: a charging/discharging circuit which charges the battery with electric power from the DC supply line and discharges the electric power from the battery to the DC supply line; a reverse power flow electric power detection circuit which detects the electric power in the reverse power flow to the AC power supply; and a control unit which adjusts the electric power in the reverse power flow to the AC power supply by charging/discharging the battery on the basis of the detection results of the reverse power flow electric power detection circuit.

## Description

### Field of the Invention

The present invention relates to a power distribution system which includes a commercial power source as a power supply connected to a power line and distributed power source, and supplies a power to a load from a power system.

### Background of the Invention

In recent years, a DC power distribution system, in which a DC power is supplied to a load from a DC power distribution device including a solar cell and fuel cell in terms of power distribution efficiency or the like, is becoming more common. Conventionally, as the DC power distribution system, e.g., a configuration disclosed in Patent Document 1 may be employed. The DC power distribution system includes, as shown in FIG. 15, a solar cell 1101 which converts solar light energy into electrical energy (DC power), a converter 1103 which converts a DC power generated by the solar cell 1101 into an appropriate output voltage Vout to supply power to the load, a fuel cell 1102 which generates a power by chemical reaction of substances, a converter 1104 which converts a DC power generated by the fuel cell 1102 into an appropriate output voltage Vout to supply power to the load, and a DC load 1105 which is operated by the DC power from the solar cell 1101 and the fuel cell 1102.

The DC power distribution system is linked to an AC power system, which is configured as a DC/AC power distribution system. The AC power system includes a bi-directional converter 1110 which converts a DC power outputted from the converters 1103 and 1104 into an AC power, and converts an AC power supplied from a commercial power source 1109 into a DC power.

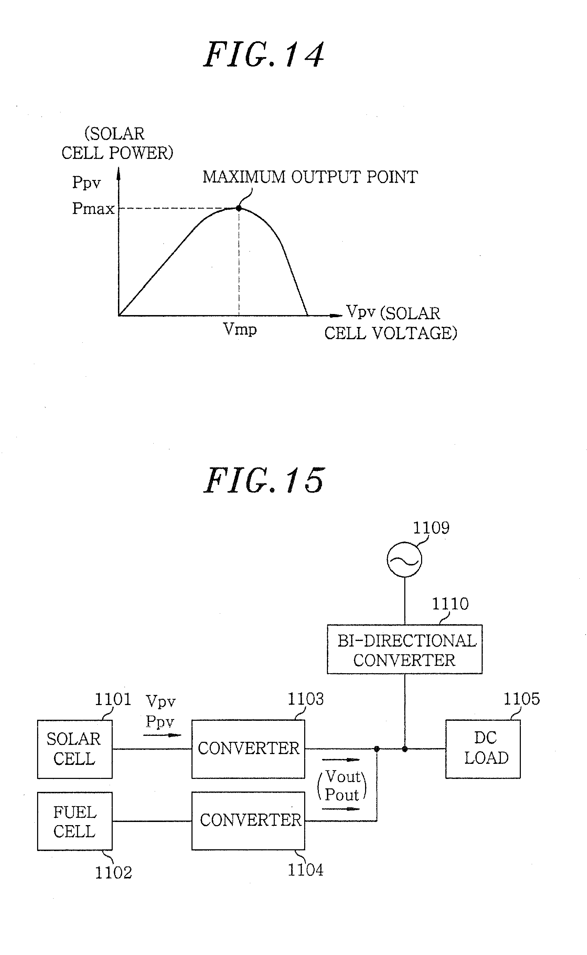

The solar cell 1101 has output characteristics as shown in FIG. 14, and an output power of the solar cell 1101 changes greatly according to its operating voltage. If the converter 1103 can control such that the solar cell 1101 operates at an operating voltage Vmp, the solar cell 1101 can output a maximum output power Pmax and the solar cell 1101 can be used efficiently. Control for maximizing the use of the solar cell 1101 by setting the output power of the solar cell 1101 to the maximum output power Pmax is called maximum power point tracking control (hereinafter, referred to as MPPT control).

Further, there is provided power generation rules for the fuel cell 1102. For example, the power generation rules prescribe the maximum output power, or regulate a steep change in power generation. According to the power generation rules, since the power generation is performed in a manner appropriate for the fuel cell 1102, it is possible to extend the life of the fuel cell 1102 while efficiently generating power from the fuel cell 1102. As described above, in a DC power generation device such as the solar cell 1101 and the fuel cell 1102, it is profitable to generate power according to their circumstances of the power generation rules, the MPPT control or the like.

In the above power distribution system, if the power consumption of the DC load 1105 is smaller than the power generation of the solar cell 1101 and the like, the surplus power can flow reversely to the commercial power source 1109, i.e., can be sold to a power company.

Also, as disclosed in Patent Document 2, there is a DC power distribution system including a storage battery. In this power distribution system, the storage battery is used mainly for backup, as being discharged when an amount of the power generated by the DC power generation device is small.

[Patent Document 1] Japanese Patent Application Publication No. 2009-232674

[Patent Document 2] Japanese Patent Application Publication No. 2009-159730

However, the reverse flow of power is not allowed indefinitely all the time. For example, the reverse flow of power is prohibited every predetermined period, or the allowable amount of the reverse flow power is limited. In the above power distribution system, in a case where the reverse flow of power is not allowed as such, the power generation of the solar cell 1101 and the like may be larger than the power consumption to generate the surplus power. In this case, in order to suppress an increase in voltage of a DC power line, it is forced to generate power with low power generation efficiency without following the MPPT control or the like.

As described above, in the case where the reverse flow of power is not allowed, it is concerned that the DC power generation device cannot generate power in accordance with the MPPT control and the power generation rules.

On the other hand, in a case where a plurality of power distribution systems are connected to a power line connected to a commercial power source, a power is supplied to the power line from a distributed power source provided in each power distribution system, and further a power can be supplied from a distributed power source of a specific power distribution system to load devices of another power distribution system.

Specifically, e.g., in a multiple dwelling house, plural power distribution systems corresponding to dwelling units are connected to one power line connected to a commercial power source. Each of the power distribution systems generally corresponds to each of the dwelling units included in the multiple dwelling house.

Further, if a distributed power source (e.g., solar cell) provided in a certain dwelling unit can generate the surplus power beyond the power required to be supplied to load devices provided in the dwelling unit, it is possible to supply the surplus power from the dwelling unit to another dwelling unit via the power line. Therefore, the transfer of power can be achieved between the plural power distribution systems corresponding to the multiple dwelling units.

However, in the case where the transfer of power can be achieved via the power line as described above, since the power line is connected to the commercial power source, the power may flow to the commercial power source from the distributed power source which has generated the surplus power. In this way, when the power flows to the commercial power source from the distributed power source, reverse power flow may occur such that power flows to the power company. The reverse power flow may cause a disadvantage of reducing the electrical stability of the power line.

### Summary of the Invention

In view of the above, the present invention provides a power distribution system capable of suppressing reverse power flow while enabling the transfer of power through a power line connected to a commercial power source between power distribution apparatuses connected to the power line.

Further, the present invention also provides a power distribution system in which a DC power generation device can perform properly power generation regardless of regulation of reverse power flow.

In accordance with a first aspect of the present invention, there is provided a power distribution system including: a DC power system in which a DC power generated by a DC power generation device is supplied to a DC load via a DC supply line; an AC power system which is linked to the DC power system, for supplying an AC power from an AC power source via an AC supply line; a battery which is connected to the DC supply line; and a control unit which adjusts reverse power flowing to the AC power source by charging/discharging the battery.

Further, the power distribution system includes: a bi-directional converter which converts the AC power from the AC supply line into a DC power, and converts the DC power from the DC supply line into an AC power; a DC/DC converter connected to the DC supply line, which converts the DC power inputted from the DC power generation device into a desired DC power in accordance with predetermined control rules stored in the DC/DC converter, and supplies the converted DC power to the DC load; a charging/discharging circuit provided between the DC supply line and the battery, which charges the battery with a power from the DC supply line and discharges the power from the battery to the DC supply line; and a reverse power detection circuit which is connected to the AC supply line and detects the reverse power flowing to the AC power source, wherein the control unit adjusts the reverse power flow by using the charging/discharging circuit to charge/discharge the battery based on detection results of the reverse power flow detection circuit.

For example, if the power generation is greater than the power demand, the DC power is supplied to the AC supply line through the bi-directional converter. At this point, the power may reversely flow to the AC power source for sale. In this case, the reverse flow of power is not allowed indefinitely all the time. For example, the reverse flow of power is prohibited or the allowable amount of reverse flow power is limited, at an interval of a predetermined time period. With the above configuration, the reverse power flow is adjusted by charging/discharging the battery. Accordingly, the reverse power flow can be adjusted without adjusting the power generated by the DC power generation device. Thus, the DC power generation device can properly generate a power regardless of the reverse power flow.

Preferably, the control unit prevents a reverse flow of the power by charging the battery with a power from the DC supply line by the charging/discharging circuit, the power being equivalent to the reverse flowing power detected by the reverse flowing power detection circuit.

By this configuration, the power equivalent to the reverse flowing power is charged in the battery from the DC power line by the charging/discharging circuit. Thus, it is possible to prevent the power from reversely flowing without adjusting the power generated by the DC power generation device.

The power distribution system may further include a voltage detection unit for detecting a voltage of the DC supply line, wherein the control unit may control the bi-directional converter such that the voltage of the DC supply line maintains a reference value.

With this configuration, the power is transferred between the AC and DC power systems such that the voltage of the DC supply line is equal to the reference value. Accordingly, the power supplied to the DC load and the power demanded by the DC load can be made in balance. In other words, when the voltage of the DC supply line is equal to the reference value, the power supply and demand are in balance. Specifically, if the voltage of the DC supply line exceeds the reference value, the power is supplied to the AC supply line from the DC supply line through the bi-directional converter.

On the other hand, if the voltage of the DC supply line is less than the reference value, the power is supplied to the DC supply line from the AC supply line through the bi-directional converter. Therefore, even if there is an imbalance between the power generation of the DC power generation device and the power demand of the DC load, there is no need to adjust the power generated by the DC power generation device. Thus, regardless of the power demand of the DC load, the DC power generation device can properly generate the power.

When the voltage of the DC supply line detected by the voltage detection unit becomes an upper limit or more, the upper limit being greater than the reference value, the control unit may control the DC/DC converter to suppress the power generated by the DC power generation device such that the voltage of the DC supply line becomes less than the upper limit.

For example, if the power required to be supplied from the DC supply line to the AC supply line in order to maintain a power equilibrium state exceeds the maximum output power of the bi-directional converter, or the reverse flow of the power is limited, the power of the DC supply line cannot be sufficiently supplied to the AC supply line. Accordingly, the voltage of the DC supply line increases.

In the present invention, when the voltage of the DC supply line becomes equal to or greater than the upper limit, it is controlled such that the voltage becomes less than the upper limit. That is, the power generated by the DC power generation device is suppressed through the DC/DC converter by the controller, and an increase in the voltage of the DC supply line is suppressed. Accordingly, overpower is prevented from occurring in the power distribution system, thereby enhancing the safety of the system.

Further, when the voltage of the DC supply line detected by the voltage detection unit becomes equal to or less than a lower limit, the lower limit being smaller than the reference value, the control unit may discharge the power from the battery to the DC supply line by the charging/discharging circuit.

By doing so, if the voltage of the DC supply line becomes equal to or less than the lower limit, the power of the battery is discharged to the DC supply line. Here, the lower limit is set based on the voltage of the DC supply line when the power supply is insufficient for the power demand of the DC load. As a case where the voltage of the DC supply line is equal to or less than the lower limit, for example, there may be a case where the power cannot be supplied from the AC supply line to the DC supply line due to a power failure or the like.

When the voltage of the DC supply line is equal to or less than the lower limit, the power of the battery is discharged to the DC supply line through the charging/discharging circuit such that the voltage of the DC supply line becomes greater than the lower limit. Thus, while performing the power generation appropriate for the DC power generation device, the power can be more stably supplied to the DC load.

Further, when the voltage of the DC supply line detected by the voltage detection unit is equal to or less than a threshold value between the reference value and the lower limit, the control unit may start the charging/discharging circuit.

Then, when the voltage of the DC supply line becomes equal to or less than the threshold value, the charging/discharging circuit is started. In this way, since the charging/discharging circuit can be stopped until the voltage of the DC supply line becomes equal to or less than the second threshold value, it is possible to reduce the operating power of the charging/discharging circuit.

Further, since the charging/discharging circuit is started before the voltage becomes equal to or less than the lower limit, the charging/discharging circuit can convert the AC power from the AC power system into a DC power and supply the DC power to the DC supply line immediately when the voltage becomes equal to or less than the lower limit. Thus, it is possible to more quickly compensate for the lack of power supply to the DC load. As described above, at the AC side converter, it is possible to achieve follow-up control for voltage drop and also reduce the power consumption.

In accordance with a second aspect of the present invention, there is provided a power distribution system including: a DC power system in which a DC power generated by a DC power generation device is supplied to a DC load via a DC supply line; an AC power system which is linked to the DC power system and in which an AC power from an AC power source is supplied via an AC supply line; a bi-directional converter which converts an AC power from the AC supply line into a DC power, and converts a DC power from the DC supply line into an AC power; a DC/DC converter which is connected to the DC supply line, converts the DC power inputted from the DC power generation device into a desired DC power according to predetermined control rules stored in the DC/DC converter, and supplies the converted DC power to the DC load; a battery which is connected to the DC supply line; and a charging/discharging circuit which is provided between the DC supply line and the battery, for charging the battery with a power from the DC supply line and discharging a power from the battery to the DC supply line.

In the power distribution system, the bi-directional converter stores a reference value, and, when a voltage of the DC supply line deviates from the reference value, controls a power outputted to the DC supply line and the AC supply line such that the voltage of the DC supply line is equal to the reference value; the DC/DC converter stores an upper limit greater than the reference value, and, when the voltage of the DC supply line becomes equal to or greater than the upper limit, controls a power outputted to the DC supply line such that the voltage of the DC supply line becomes less than the upper limit; and the charging/discharging circuit stores a lower limit smaller than the reference value, and, when the voltage of the DC supply line becomes less than the lower limit, controls charging and discharging of the battery such that the voltage of the DC supply line is equal to the lower limit.

In this configuration, without performing central control through a central controller, each converter and charging/discharging circuit performs control. That is, each converter and charging/discharging circuit controls the voltage of the DC supply line by comparing the voltage of the DC supply line with a command value or threshold value stored therein. In this way, each converter can make the power supply and demand in balance without communicating with another converter.

In accordance with a third aspect of the present invention, there is provided a power distribution system including: a plurality of power distribution apparatuses, each having a distributed power source provided in a power line connected to a commercial power source; and a storage device connected to the power line for storing a power flowing to the commercial power source from the distributed power source. Further, each of the power distribution apparatuses includes at least one load device to which the power is supplied, and a power can be supplied to the load device of another one of the power distribution apparatuses from the distributed power source of at least one of the power distribution apparatuses.

With the above configuration, the power line is provided with the storage device storing the power flowing to the commercial power source from the distributed power source. Accordingly, the transfer of power between the power distribution apparatuses connected to the power line can be achieved through the power line connected to the commercial power source. By storing a power in the storage device, it is possible to suppress the reverse flow of the power to the commercial power source from the distributed power source of the power distribution apparatus.

Further, the power distribution system may include a sensor connected to the power line between the commercial power source and the power distribution apparatuses, for detecting a current flowing in the power line, wherein the storage device is controlled based on detection results of the sensor.

According to this configuration, the storage device is controlled based on the detection results (i.e., the current intensity flowing in the power line) of the sensor provided between the commercial power source and the power distribution apparatuses. Thus, the reverse power flow can be suppressed automatically based on the current flowing in the power line (i.e., the current value of the power line).

Preferably, the storage device is controlled based on a command signal outputted from power management facilities for managing power of the commercial power source.

By doing this, the storage device is controlled based on the command signal outputted from the power management facilities managing the power of the commercial power source. Accordingly, in a state where the command signal for suppressing the reverse power flow is not outputted from the power management facilities, the power is not stored in the storage device, and the reverse power flow is allowed to enable the sale of electric power from the power distribution apparatuses.

Further, the storage device may be discharged to supply a power to the at least one load device.

According to the above configuration, by discharging the power from the storage device, the power is supplied to at least one load device. Accordingly, since the storage device can also supply the power to the load device of the power distribution apparatuses, it is possible to reduce the power (i.e., purchased power) supplied from the commercial power source.

A power supply to the load device of a specific power distribution apparatus among the power distribution apparatuses may be limited based on the power discharged from the storage device.

According to the above configuration, on the basis of the power being discharged from the storage device, the power supply to the load device of the specific power distribution apparatus among the power distribution apparatuses can be limited. Accordingly, it is possible to reduce the power (i.e., purchased power) supplied from the commercial power source. Specifically, if the discharge capacity of the storage device is low, by limiting the power supply to the load device of the specific power distribution apparatus, the distributed power source or the storage device can feed the power required for the other load devices, thereby reducing the power supply from the commercial power source.

Further, a power supply to the load device of a specific power distribution apparatus among the plurality of power distribution apparatuses may be cut off based on the power being discharged from the storage device.

According to the above configuration, on the basis of the power being discharged from the storage device, the power supply to the load device of the specific power distribution apparatus among the power distribution apparatuses can be cut off. Accordingly, it is possible to surely reduce the power supply from the commercial power source.

Power generation of the distributed power source may be limited based on a charging state of the storage device.

According to the above configuration, based on the charging state of the storage device, the power generation of the distributed power source is limited. Accordingly, if the storage device is fully charged, the power generation of the distributed power source is limited. Thus, it is possible to suppress the reverse power flow while preventing the storage device from being overcharged.

Power generations of a plurality of the distributed power sources may be limited sequentially based on priorities that are set in advance.

According to the above configuration, based on the priorities that are set in advance, the power generations of a plurality of the distributed power sources are limited sequentially. Accordingly, it is possible to control the power generations of a plurality of the distributed power sources in the order desired.

Preferably, each of the power distribution apparatuses is provided in each dwelling unit of a multiple dwelling house.

Accordingly, the transfer of power can be achieved between dwelling units of the multiple dwelling house. Further, it is possible to suppress the reverse power flow from the multiple dwelling house.

Further, the power distribution system may include a power measuring sensor for measuring an amount of a power being supplied to each of the power distribution apparatuses from the power line, wherein transfer of the power between the power distribution apparatuses is controlled based on measurement results of the power measuring sensor.

According to the above configuration, on the basis of the measurement results (the amount of the power supplied to each of the power distribution apparatuses from the power line) of the power measuring sensor, the transfer of the power between the power distribution apparatuses is managed. Accordingly, the transfer of the power can be managed between the power distribution apparatuses and the sale of an electric power can be achieved between the power distribution apparatuses.

The transfer of the power between the power distribution apparatuses may be controlled based on information relating to a power consumed in the load device and a power supplied from the distributed power source of each of the power distribution apparatuses.

In this case, based on the information relating to the power consumed in the load device and the power supplied from the distributed power source in the power distribution apparatus, the transfer of the power between the power distribution apparatuses is managed. Accordingly, the transfer of the power can be finely and minutely managed between the power distribution apparatuses and the sale of the electric power can be achieved between the power distribution apparatuses.

Further, the power distribution apparatus may include a power supply control unit for controlling transfer of a power through the power line, and the power distribution system may further include a controller connected to communicate with the power supply control units, for controlling the power supply control units to manage the transfer of the power between the power distribution apparatuses based on the measurement results of the power measuring sensor.

According to the above configuration, the power distribution system includes the controller that is communicatively connected to the power supply control units respectively provided in the power distribution apparatuses. Then, based on the measurement results of the power measuring sensor, the controller controls the plural power supply control units to manage the transfer of the power between the power distribution apparatuses. Thus, the plural power supply control units are controlled by the controller, thereby collectively managing the transfer of the power between the power distribution apparatuses.

When a power is supplied to the power distribution apparatus, the power distribution apparatus may be billed based on an amount of the power supplied to the power distribution system, and there may be set a difference between billing for an amount of a power supplied to the power distribution apparatus from the commercial power source and billing for the amount of the power supplied to the power distribution apparatus from the distributed power source.

According to the above configuration, for example, by setting the billing amount for the power supplied from the commercial power source to the power distribution apparatus to be greater than the billing amount for the power supplied from the distributed power source to the power distribution apparatus, the user to be billed can be encouraged to purchase the power from the distributed power source.

Preferably, the power distribution system further includes a display device for displaying billing-related information.

In this case, the user to be billed can determine whether to purchase a power from which power source of the commercial power source and the distributed power source by referring to the billing-related information displayed on the display device.

The distributed power source may include multiple types of power sources. In this case, the power distribution apparatus having the distributed power source which has supplied a power outputs information for distinguishing the type of the power source which has supplied the power as data.

According to the above configuration, it is possible to obtain the information for distinguishing the distributed power source which has supplied the power, from the power distribution apparatus having the distributed power source which has supplied the power and utilize the information in various controls.

Further, when the power distribution apparatus to which the power has been supplied is billed based on the power supplied to the power distribution apparatus, the amount of power supplied to the power distribution apparatus may be billed differently according to the type of the distributed power source used to supply the power to the power distribution apparatus.

By doing this, the amount of the power is billed differently according to the type of the distributed power source used to supply the power to the power distribution apparatus. Accordingly, for example, by setting the billing amount for the power supplied from the distributed power source to the power distribution apparatus using a specific power source (e.g. solar cell) to be smaller than the billing amount for the power supplied from the distributed power source to the power distribution apparatus using another power source, the user to be billed can be encouraged to purchase power from the specific power source.

### Brief Description of the Drawings

The objects and features of the present invention will become apparent from the following description of embodiments, given in conjunction with the accompanying drawings, in which:
FIG. 1 is a configuration diagram of a power distribution system in accordance with a first embodiment of the present invention;
FIG. 2 is a configuration diagram schematically showing a configuration of a power supply system including the power distribution system in accordance with the first embodiment of the present invention;
FIG. 3 is a flowchart for explaining an operation of a control device provided in a power distribution apparatus selling an electric power in the power distribution system in accordance with the first embodiment of the present invention;
FIG. 4 is a flowchart for explaining a billing-related operation of the control device for the power purchased and sold in the power distribution system in accordance with the first embodiment of the present invention;
FIG. 5 is a flowchart for explaining an operation of the control device to suppress a reverse power flow in the power distribution system in accordance with the first embodiment of the present invention;
FIG. 6 is a configuration diagram of a power distribution system in accordance with a second embodiment of the present invention;
FIG. 7 is a flowchart for explaining an operation of the control device to suppress a reverse power flow in the power distribution system in accordance with the second embodiment of the present invention;
FIG. 8 is a block diagram showing a configuration of a power distribution system in accordance with a third embodiment of the present invention;
FIG. 9 is a block diagram specifically showing a control unit in the power distribution system in accordance with the third embodiment of the present invention;
FIG. 10 is a block diagram showing a configuration of converters 155 to 159 in the power distribution system in accordance with the third embodiment of the present invention;
FIGS. 11A and 11B illustrate a graph showing transition of first and second threshold values and first and second command values, and a graph showing transition of the first command value and voltage V in the power distribution system in accordance with the third embodiment of the present invention, respectively;
FIGS. 12A and 12B illustrate a flowchart showing a processing procedure of a power feeding program, and a flowchart showing a processing procedure of a reverse power flow regulation program in accordance with the third embodiment of the present invention, respectively;
FIG. 13 is a block diagram more specifically showing a control unit in the power distribution system in accordance with a fourth embodiment of the present invention;
FIG. 14 illustrates a graph showing voltage-power characteristics of a solar cell; and
FIG. 15 is a block diagram showing a configuration of a conventional power distribution system.

### Detailed Description of the Embodiments

Hereinafter, embodiments of the present invention will be described in detail with reference to the accompanying drawings. Further, each figure is a schematic diagram illustrating only a configuration required to explain a power distribution system, and an illustration and description of the other configuration will be omitted.

### (First Embodiment)

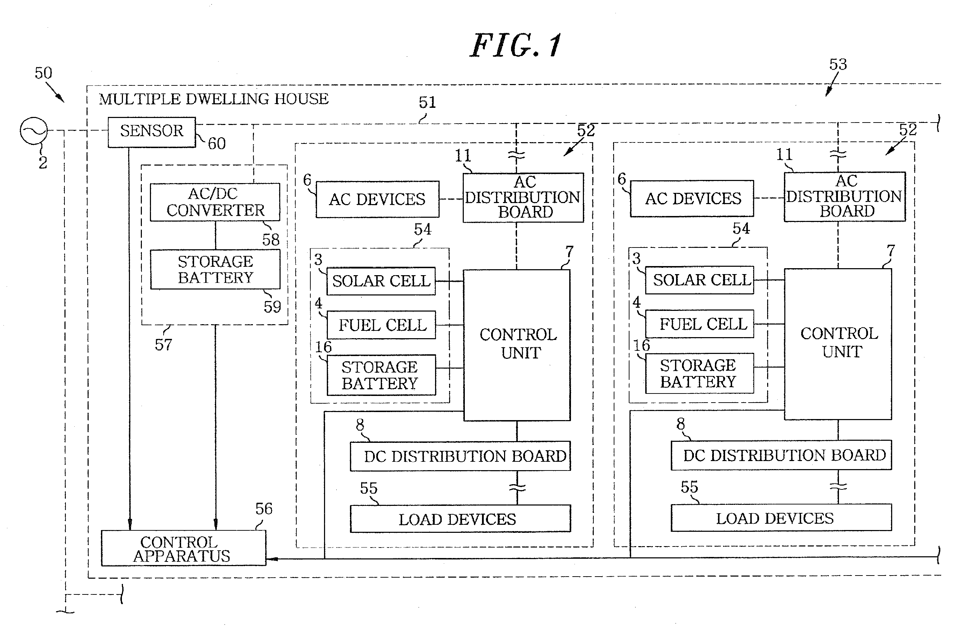

As shown in FIG. 1, a power distribution system 50 includes a plurality of power distribution apparatuses 52 which are connected to one power line 51 connected to a commercial AC power source 2 serving as a commercial power source. In the embodiment, the power line 51 is a DC power line serving as a trunk line of a power supply path provided in a multiple dwelling house such as an apartment house, and each of the power distribution apparatuses 52 is provided in each dwelling unit of the multiple dwelling house. Thus, a power distribution part 53 constituted by a plurality of the power distribution apparatuses 52 is configured to distribute power to the entire multiple dwelling house.

Each of the power distribution apparatuses 52 has a distributed power source 54, load devices 55 to which power is supplied, and a control unit 7 which controls the power being supplied to the load devices 55 from the commercial AC power source 2 and the distributed power source 54. The control unit 7 is connected to the power line 51 through an AC distribution board 11.

In this embodiment, the distributed power source 54 includes a solar cell 3, a fuel cell 4 and a storage battery 16. The solar cell 3 is a power generation source which generates power by converting solar light energy into power. Further, the fuel cell 4 is a power generation source which generates power through a chemical reaction between a fuel and an oxidizer. In addition, the storage battery 16 is a chargeable/dischargeable power supply, which stores the power supplied from the commercial AC power source 2, the solar cell 3 and the fuel cell 4, and discharges the stored power if necessary. The power from the power sources (i.e., the solar cell 3, the fuel cell 4 and the storage battery 16) constituting the distributed power source 54 is supplied to the load devices 55 through the control unit 7.

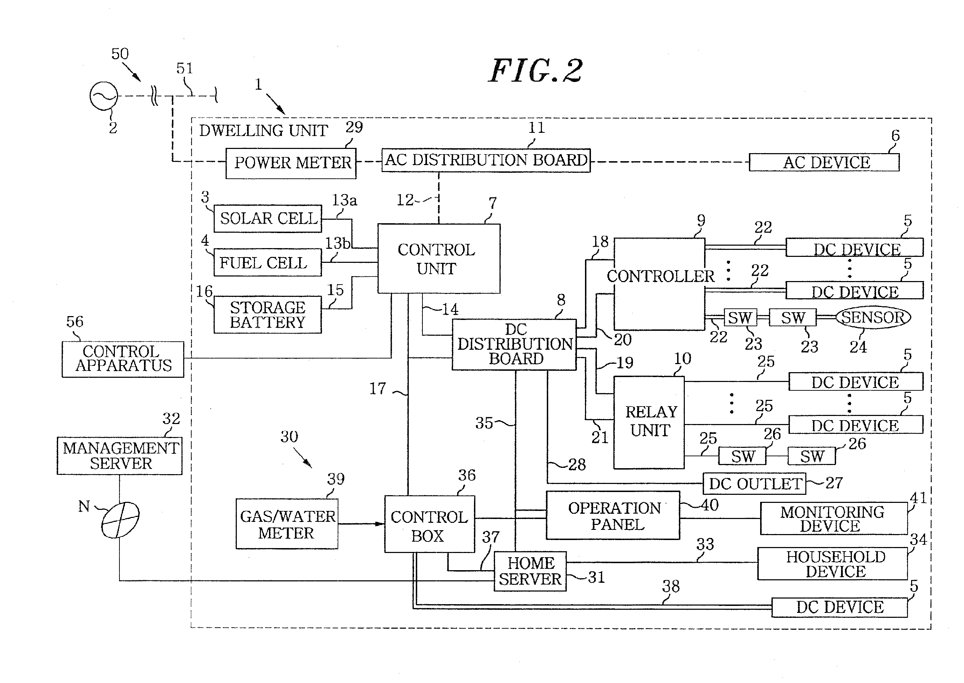

The load devices 55 include DC devices 5 (see FIG. 2) such as an air conditioner and an illumination apparatus. The load devices 55 are connected to the control unit 7 via a DC distribution board 8. Accordingly, the power supply path is allowed to branch by the DC distribution board 8 such that the power can be supplied to a plurality of the load devices 55 (i.e., the DC devices 5) in one dwelling unit. Further, AC devices 6 (see FIG. 2) are connected to the control unit 7 via the AC distribution board 11. Accordingly, the power supply path is allowed to branch by the AC distribution board 11 such that the power can be supplied to a plurality of the load AC devices 6 in one dwelling unit.

The control unit 7 serving as a power supply control unit converts a power supplied to the control unit 7 from the commercial AC power source 2 into a power corresponding to the load devices 6 and 55 in the dwelling unit, and supplies the power to the load devices 6 and 55. In addition, the control unit 7 converts a power supplied from the distributed power source 54 into a power corresponding to the load devices 6 and 55 in the dwelling unit, and supplies the power to the load devices 6 and 55. That is, if the solar cell 3 or the fuel cell 4 generates power, or if the storage battery 16 can discharge power, the power is supplied to the load devices 6 and 55 from the distributed power source 54 as well as the commercial AC power source 2.

Further, if the distributed power source 54 can sufficiently supply power to load devices 6 and 55, the commercial AC power source 2 may not supply power to the load devices 6 and 55. In other words, the power may be supplied from either of the commercial AC power source 2 and the distributed power source 54 as long as sufficient power is supplied to the load devices 6 and 55.

Further, the control unit 7 functions as not only a converter which converts an AC power supplied from the commercial AC power source 2 into a DC power to be supplied to the load devices 6 and 55, but also an inverter which converts a DC power supplied from the distributed power source 54 into an AC power to be supplied to the AC devices 6 and the power line 51.

In other words, under certain conditions, the control unit 7 converts a DC power supplied to the control unit 7 from the distributed power source 54 into an AC power, and supplies the AC power to the power line 51. Accordingly, in the power distribution system 50, since the multiple power distribution apparatuses 52 are connected to the common power line 51, it is possible to supply a power from the distributed power source 54 of a specific power distribution apparatus 52 to the load devices 6 and 55 of another power distribution apparatus 52 via the power line 51. In this embodiment, the power can be transferred between dwelling units.

Next, a power supply system 1 including the power distribution apparatus 52 of each dwelling unit, the power distribution apparatus 52 serving as a constituent part of the power distribution system 50 will be described in detail with reference to FIG. 2. Further, the power distribution apparatus 52 of each dwelling unit has the same configuration.

As shown in FIG. 2, the dwelling unit is provided with the power supply system 1 to supply power to various devices (illumination apparatus, air conditioner, home appliance, audio and video apparatus, etc.) installed in the home. The power supply system 1 is configured to not only supply power from the household commercial power source (AC power source) 2 to various devices, but also supply power from the solar cell 3 generating power by using sunlight or the fuel cell 4 to various devices. The power supply system 1 supplies power to the AC devices 6 being operated by an alternating current (AC) power source (AC power source) in addition to DC devices 5 being operated by a direct current (DC) power source (DC power source).

The power supply system 1 includes the control unit 7 and the DC distribution board (having a DC breaker therein) 8. Further, the power supply system 1 includes a controller 9 and a relay unit 10 to control the operation of the DC devices 5 in the home.

Connected to the control unit 7 is the AC distribution board 11 to distribute AC power via an AC power line 12. Further, connected to the AC distribution board 11 are the AC power source 2 and the AC devices 6 via an AC power line 12a. The control unit 7 is connected to the commercial AC power source 2 via the AC distribution board 11. Also, the control unit 7 is connected to the solar cell 3 via a DC power line 13a and connected to the fuel cell 4 via a DC power line 13b. The control unit 7 functioning as a converter receives an AC power from the AC distribution board 11, and converts the AC power into a specific DC power.

Also, the control unit 7 receives a DC power from the solar cell 3 or the fuel cell 4, and converts the DC power into a specific DC power. Further, the control unit 7 outputs the converted DC power to the DC distribution board 8 via a DC power line 14, or outputs the converted DC power to the storage battery 16 via a DC power line 15 to store the power. Besides, the control unit 7 receives the DC power stored in the storage battery 16, converts the DC power into a specific DC power, and outputs the converted DC power to the DC distribution board 8 via the DC power line 14.

Further, the control unit 7 may not only receive an AC power from the AC distribution board 11, but also convert a DC power of the solar cell 3 or the storage battery 16 into an AC power to be supplied to the AC distribution board 11. In other words, the control unit 7 also functioning as an inverter receives a DC power from the solar cell 3, the fuel cell 4 and the storage battery 16, and converts the DC power into a specific AC power. Then, the control unit 7 outputs (discharges) the converted AC power to the power line 51 via the AC power line 12 and the AC distribution board 11. Further, the control unit 7 communicates data with the DC distribution board 8 via a signal line 17.

The DC distribution board 8 is a kind of breaker for DC power. The DC distribution board 8 distributes the DC power inputted from the control unit 7, and outputs the distributed DC power to the controller 9 via a DC power line 18, or outputs the distributed DC power to the relay unit 10 via a DC power line 19. Further, the DC distribution board 8 exchanges data with the controller 9 via a signal line 20, or exchanges data with the relay unit 10 via a signal line 21.

The controller 9 is connected to a plurality of the DC devices 5. The DC devices 5 are connected to the controller 9 via DC supply lines 22, each capable of carrying both DC power and data. Each of the DC supply lines 22 transports both power and data to each of the DC devices 5 via a pair of wires by so-called power line carrier communications in which a communications signal for transferring data using high-frequency carrier waves is superimposed on a DC voltage for operating the DC devices 5.

The controller 9 obtains the DC power for the DC devices 5 via the DC power line 18, and understands how to control which of the DC devices 5 based on an operation command obtained from the DC distribution board 8 via the signal line 20. Then, the controller 9 outputs the DC voltage and the operation command to target DC devices 5 via the DC supply lines 22 to control the operation of the DC devices 5.

The controller 9 is connected via the DC supply line 22 to switches 23 used when switching the operations of the DC devices 5 in the home. In addition, the controller 9 is connected via the DC supply line 22 to a sensor 24 for detecting radio waves originating from, e.g., an infrared remote controller. Thus, by the operation of the switches 23 or the detection of the sensor 24 in addition to the operation commands from the DC distribution board 8, the operations of the DC devices 5 are controlled through the communications signal flowing through the DC supply lines 22 on the basis of the detection results.

Connected to the relay unit 10 is a plurality of the DC devices 5 via individual DC power lines 25. The relay unit 10 obtains the DC power for the DC devices 5 via the DC power line 19, and understands which of the DC devices 5 will be operated based on an operation command obtained from the DC distribution board 8 via the signal line 21. Then, the relay unit 10 relays on and off the power supply to target DC devices 5 via the DC power lines 25 to control the operation of the DC devices 5. Further, the relay unit 10 is connected to a plurality of switches 26 for manually operating the DC devices 5. By turning on and off the power supply through the DC power lines 25 in the relay unit 10 according to the operation of the switches 26, the DC devices 5 are controlled.

The DC distribution board 8 is connected to a DC outlet 27 installed in the house in the form of, e.g., a wall outlet or floor outlet via a DC power line 28. If a plug of a DC device (not shown) is inserted into the DC outlet 27, it is possible to directly supply a DC power to the device.

Further, a power meter 29 is provided between the commercial power source 2 and the AC distribution board 11, and capable of remotely reading the usage of the commercial power source 2 in the dwelling unit in which the AC distribution board 11 is installed. The power meter 29 has, e.g., a power line carrier communications or wireless communications function in addition to the function of remotely reading the usage of the commercial power source. The power meter 29 transmits the reading results to a power company or the like through the power line carrier communication or wireless communication.

The power supply system 1 is provided with a network system 30 to allow various devices in the home to be controlled by the network communications. The network system 30 includes a home server 31 serving as a control unit of the network system 30. The home server 31 is connected to a management server 32 on the outside of the house through a network N such as the Internet, and also connected to a household device 34 via a signal line 33. Further, the home server 31 is operated by the DC power obtained from the DC distribution board 8 via a DC power line 35.

The home server 31 is connected to a control box 36 via a signal line 37, the control box 36 managing the operation control of various devices in the home through the network communications. The control box 36 is connected to the control unit 7 and the DC distribution board 8 via the signal line 17, and also configured to directly control the DC device 5 via a DC supply line 38.

The control box 36 is connected to, e.g., a gas/water meter 39 capable of remotely reading the amount of gas or water used, and an operation panel 40 of the network system 30. The operation panel 40 is connected to a monitoring device 41 consisting of, e.g., an intercom, sensor or camera. Further, in this embodiment, the operation panel 40 is a display device with a monitor, and various pieces of information are displayed on the monitor of the operation panel 40.

If operation commands related to various devices in the home are inputted through the network N, the home server 31 notifies instructions to the control box 36, and controls the control box 36 such that various devices are operated in accordance with the operation commands. Further, the home server 31 is configured to provide various pieces of information obtained from the gas/water meter 39 to the management server 32 through the network N. Furthermore, when receiving from the operation panel 40 that there is an error detected by the monitoring device 41, the home server 31 provides the received information to the management server 32 through the network N.

Further, as shown in FIG. 1, the multiple dwelling house is provided with a control apparatus 56 for controlling the control unit 7 and the like of each dwelling unit, and the control apparatus 56 is connected to communicate with a plurality of the control units 7. That is, with respect to the power management, the control apparatus 56 serves as a master device for collectively managing the power control in the plural control units 7, and the control unit 7 serves as a slave device.

Next, a configuration of enabling the sale of electric power in the power distribution system 50 of the present invention in which the power can be transferred between dwelling units of the multiple dwelling house will be described in detail.

As described above, under certain conditions, the control unit 7 converts a DC power supplied from the distributed power source 54 into an AC power, and supplies the AC power to the power line 51. In this case, the certain conditions in which the power is supplied from the control unit 7 to the power line 51 are that the distributed power source 54 can generate surplus power.

That is, if the distributed power source 54 provided in each dwelling unit can supply, to the control unit 7, power more than the power required to be supplied to the load devices 6 and 55 in the dwelling unit in which the distributed power source 54 is installed, the surplus power is supplied from the distributed power source 54 to the control unit 7.

Therefore, the surplus power from one dwelling unit is supplied to another dwelling unit via the power line 51. Hereinafter, a flow of the operation of the control unit 7 when selling and purchasing the surplus power between the dwelling units will be described assuming that the power distribution apparatus 52 of a dwelling unit supplying (i.e., selling) surplus power is a power selling system A, and the power distribution apparatus 52 of a dwelling unit receiving (i.e., purchasing) surplus power is a power purchasing system B. Further, the surplus power may be supplied to one power purchasing system B from a plurality of power selling systems A, and the surplus power may be supplied to a plurality of power purchasing systems B from one power selling system A.

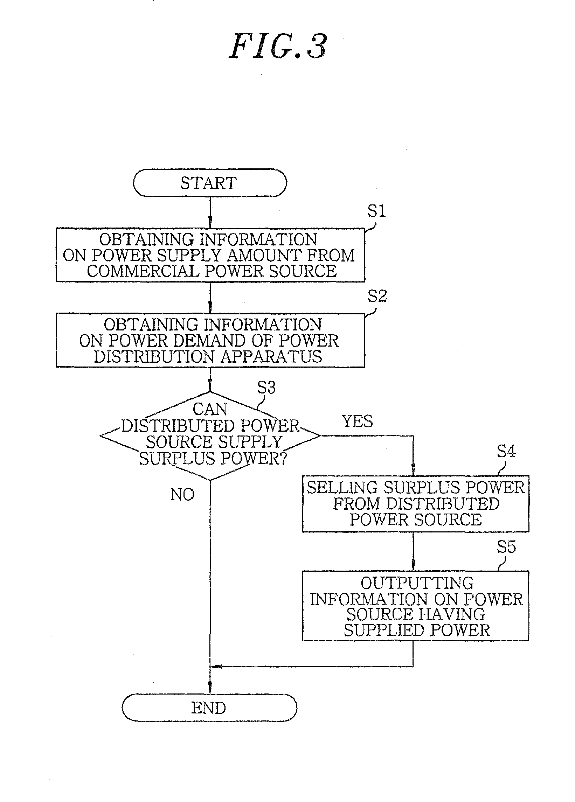

FIG. 3 is a flowchart showing the flow of the operation of the control unit 7 of the power selling system A when selling the surplus power between the dwelling units. A series of operations shown in FIG. 3, for example, may be started manually, or may be started automatically based on a command signal from the control apparatus 56.

Referring to FIG. 3, firstly, the control unit 7 obtains information on an amount of the power demanded by the AC devices 6 through the AC distribution board 11 (step S1). Subsequently, the control unit 7 obtains information on an amount of the power demanded by the load devices 55 (step S2). For example, the information on the amount of the power demanded by the load devices 55 can be obtained based on the power detection results of the controller 9 and the relay unit 10 connected to the DC devices 5. That is, the information on the amount of the demanded power includes information relating to the power consumed in the load devices 6 and 55.

Then, the control unit 7 determines whether the distributed power source 54 can supply the surplus power (step S3). Specifically, the control unit 7 obtains information on an amount of the power that can be supplied from the distributed power source 54, and determines whether the distributed power source 54 can sufficiently supply the power required for the load devices 6 and 55 in the power selling system A on the basis of the information obtained in steps S1 and S2. In other words, if the amount of the power that can be supplied from the distributed power source 54 is equal to or greater than the total amount of the demanded power, the control unit 7 determines that the distributed power source 54 of the power selling system A can supply the surplus power.

If it is determined in step S3 that the distributed power source 54 can supply the surplus power, the determination result is notified to the control apparatus 56, and the power is sold from the distributed power source 54 of the power selling system A according to the instructions of the control apparatus 56 (step S4). That is, the surplus power from the power selling system A is supplied to the power line 51.

In this embodiment, when the surplus power is supplied from the power selling system A, the control unit 7 outputs, to the control apparatus 56, information on the power source which has supplied the power (step S5). In other words, the information on the surplus power supply source, i.e., which of the solar cell 3, the fuel cell 4 and the storage battery 16 has supplied the surplus power, is outputted as data from the control unit 7 to the control apparatus 56.

In this way, after the operations of steps S4 and S5 have been performed, or if it is determined in step S3 that the distributed power source 54 cannot supply the surplus power, the series of operations shown in FIG. 2 is ended.

Next, a flow of the operation of the control apparatus 56 when the surplus power is sold between the dwelling units will be described.

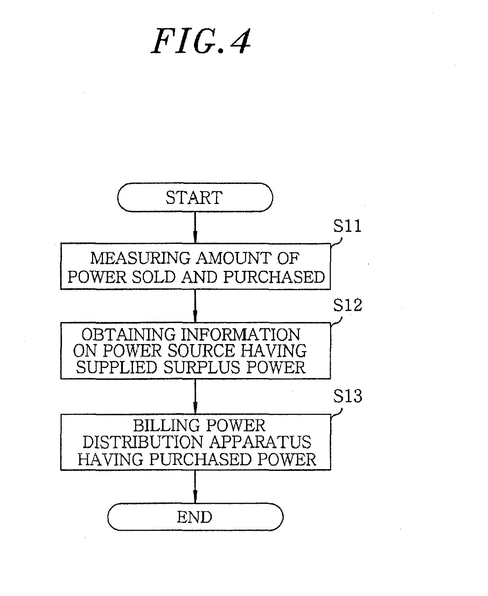

FIG. 4 is a flowchart showing a flow of a billing-related operation of the control apparatus 56 when the surplus power is sold between the dwelling units.

Referring to FIG. 4, firstly, the control apparatus 56 measures an amount of the power traded (transferred) between the dwelling units (i.e., between the power selling system A and the power purchasing system B) (step S11). The amount of power traded between the dwelling units can be measured by using the power meter 29 capable of measuring the power supplied to each of the power distribution apparatuses 52 from the power line 51.

Subsequently, in this embodiment, the control apparatus 56 obtains information on the power source which has supplied the surplus power from the power selling system A (step S12). That is, the output data in step S5 of FIG. 3 is inputted to the control apparatus 56, and, accordingly, the control apparatus 56 obtains information on which of the solar cell 3, the fuel cell 4 and the storage battery 16 has supplied the surplus power.

Then, the control apparatus 56 bills the power distribution apparatus 52 which has purchased the power (i.e., the power purchasing system B) (step S13). In this embodiment, a billing amount charged to the power purchasing system is calculated by multiplying the amount of the traded power by a coefficient depending on the surplus power supply source. In other words, the billing amount is different according to whether the surplus power supply source is the solar cell 3, the fuel cell 4, or the storage battery 16. Accordingly, the amount of the power supplied to the power purchasing system B from the distributed power source 54 of the power selling system A is billed differently according to the type of the power source used to supply the surplus power to the power purchasing system B.

As described above, in this embodiment, it is configured to manage billing or the like associated with the transfer of power between the power distribution apparatuses 52 on the basis of the measurement results of the power meter 29 which measures the amount of the power supplied to each of the power distribution apparatuses 52 from the power line 51. Further, in this embodiment, in step S3 of FIG. 3 described above, it is determined whether the distributed power source 54 can supply the surplus power on the basis of the information relating to the power supplied by the distributed power source 54 and the power consumption of the load devices 6 and 55, thereby managing the transfer of power between the power distribution apparatuses.

Further, in this embodiment, it is configured such that the control apparatus 56 controls a plurality of the control units 7 to manage the transfer of power between the power distribution apparatuses 52 (i.e., the power selling system A and the power purchasing system B). Specifically, for example, the control apparatus 56 bills each of the power distribution apparatuses 52 by setting a difference between billing for the amount of the power supplied from the commercial AC power source 2 to the power distribution apparatus 52 and billing for the amount of the power supplied from the distributed power source 54 of the power selling system A to the power distribution apparatus 52.

Furthermore, in this embodiment, it is configured such that the billing-related information is displayed on the operation panel 40 with the monitor. For example, the control apparatus 56 is configured to receive the information on whether the surplus power can be supplied, an amount of the surplus power that can be supplied, the surplus power supply source and the like from the power selling system A, and, in the power purchasing system B, display the information on the operation panel 40 through the control unit 7 and the control box 36.

Further, it is configured to allow a resident of the dwelling unit, in which the power purchasing system B is provided, to select whether to purchase the power from which power source of the power selling system A using the operation panel 40 of the power purchasing system B. Besides, it is configured such that the power can be purchased from the power selling system A by operating the operation panel 40 on which the billing information is displayed. In addition, the operation panel 40 may display the information on the power being sold from a plurality of power selling systems A.

Further, the present embodiment, as shown in FIG. 1, is characterized in that a storage device 57 for storing the power flowing to the commercial AC power source 2 from the distributed power source 54 is connected to and provided in the power line 51 such that the surplus power does not flow toward the commercial AC power source 2 on the outside of the multiple dwelling house, and a sensor 60 is connected to the power line 51 serving as a lead-in wire to the multiple dwelling house from the commercial AC power source 2. The characteristic configuration of the present embodiment will be described below in more detail.

The storage device 57 that can be charged and discharged includes an AC/DC converter 58 serving as a converter and inverter, and a storage battery 59 connected to the power line 51 through the AC/DC converter 58. The AC/DC converter 58 serving as a converter is connected to the power line 51. In case of storing power in the storage device 57 (charging the storage device 57), the AC/DC converter 58 acquires an AC power from the power line 51, converts the acquired AC power into a specific DC power, and supplies the converted DC power to the storage battery 59. The storage battery 59 connected to the AC/DC converter 58 stores the DC power supplied from the AC/DC converter 58.

Further, in case of discharging power from the storage device 57, the storage battery 59 supplies the stored DC power to the AC/DC converter 58. In this case, the AC/DC converter 58 also serves as an inverter to convert the DC power discharged from the storage battery 59 into a specific AC power, and supplies the converted AC power to the power line 51. The charging and discharging of the storage device 57 are controlled by the control apparatus 56 serving as a maser power management device.

In this embodiment, the charging and discharging of the storage device 57 are controlled on the basis of the current detected by the sensor 60 connected to the power line 51. The sensor 60 is provided in the lead-in wire to the multiple dwelling house, and particularly provided between the commercial AC power source 2 and the power distribution part 53 including a plurality of the power distribution apparatuses 52. That is, the sensor 60 serves as a current meter for detecting a reverse power flow.

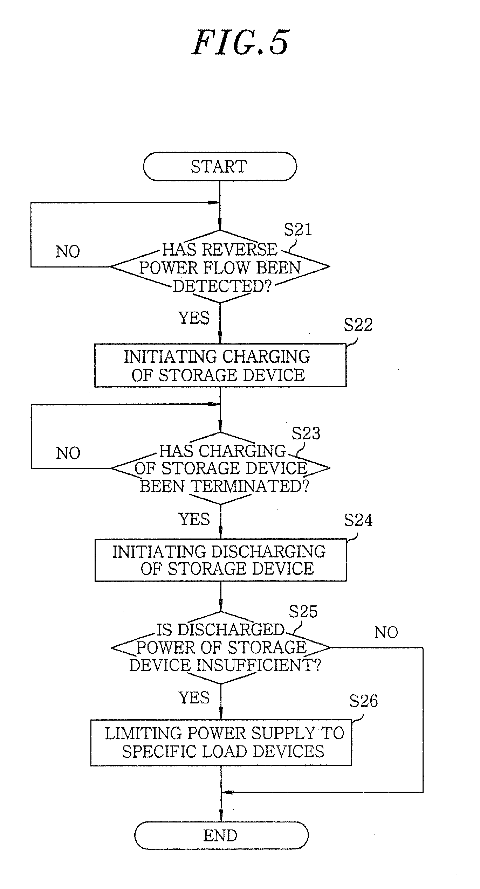

The sensor 60 may detect the reverse power flow of surplus power by detecting the current (i.e., current value) flowing in the power line 51. The sensor 60 is connected to the control apparatus 56, and information on the detection results is outputted from the sensor 60 to the control apparatus 56. The storage device 57 is controlled by the control apparatus 56 on the basis of the detection results of the sensor 60. Hereinafter, a flow of the operation of the control apparatus 56 when the reverse power flow is suppressed using the storage device 57 will be described with reference to FIG. 5.

As shown in FIG. 5, first, the control apparatus 56 determines whether the reverse power flow has been detected based on the detection results of the sensor 60 (step S21). A series of operations subsequent to step S21 shown in FIG. 5 is not performed until it is determined in step S21 that the reverse power flow has been detected.

If it is determined that the reverse power flow has been detected in step S21, the control apparatus 56 outputs a signal for initiating the storage of power to the storage device 57, and the storage device 57 is operated to initiate the charging (storage of power) (step S22). That is, if the reverse power flow occurs due to the supply of surplus power from the power selling system A to the power line 51, the surplus power is stored in the storage battery 59 of the storage device 57. In the manner as described above, the surplus power is stored in the storage device 57 and, thus, it is possible to suppress the reverse power flow from the distributed power source 54 of the power selling system A to the commercial AC power source 2.

Subsequently, the control apparatus 56 determines whether to terminate the charging of the storage device 57 (step S23). Preferably, the determination on whether to terminate the charging of the storage device 57 in step S23 is made based on whether the reverse power flow will not occur even when the charging of the storage device 57 is terminated.

In other words, it is preferred to terminate the charging of the storage device 57 if it is determined that the reverse power flow does not occur even after the termination of the charging of the storage device 57, based on the amount of power that can be supplied from the distributed power source 54 of the power distribution apparatus 52, the current (i.e., current value) flowing in the power line 51 or the like. In addition, the determination on whether to terminate the charging of the storage device 57 may be made based on whether the storage device 57 is fully charged.

If it is determined to terminate the charging of the storage device 57 in step S23, the control apparatus 56 outputs a signal for initiating the discharging of the storage device 57, and the storage device 57 is operated to initiate the discharging (step S24). Thus, the surplus power stored in the storage device 57 is supplied to the power line 51, and the discharged power is supplied to at least one of the load devices 6 and 55. In other words, it is configured to minimize the power supplied from the commercial AC power source 2 to the power distribution apparatuses 52. Further, a series of operations subsequent to step S23 shown in FIG. 5 is not performed until it is determined to terminate the charging of the storage device 57 in step S23.

Then, in this embodiment, the control apparatus 56 determines whether the discharged power of the storage device 57 is insufficient or not (step S25). Specifically, it is determined in step S25 that the discharged power of the storage device 57 is insufficient if the discharged power of the storage device 57 is equal to or less than a predetermined power.

If it is determined in step S25 that the discharged power of the storage device 57 is insufficient, the control apparatus 56 limits the power supply to the load devices 6 and 55 of specific power distribution apparatuses 52 among the plurality of power distribution apparatuses 52 (step S26). In this embodiment, it is configured to cut off the power supply to the load devices 6 and 55 of the specific power distribution apparatuses 52. In this way, it is configured to minimize the power supplied from the commercial AC power source 2 to the power distribution apparatuses 52. Preferably, the load devices 6 and 55 to which the power supply is cut off in step S26 may be designated preferentially by a user

According to the present embodiment, it is possible to obtain the following effects:
(1) The power line 51 connected to the commercial AC power source 2 is connected to a plurality of the power distribution apparatuses 52, and each of the power distribution apparatuses 52 has the load devices 6 and 55 to which the power is supplied and the distributed power source 54 which can supply the power to the load devices 6 and 55. Further, in the power distribution system 50 in which the power can be supplied from the distributed power source 54 of at least one of the power distribution apparatuses 52 to the load devices 6 and 55 of another power distribution apparatus 52, the power line 51 is connected and provided with the storage device 57 storing the power flowing to the commercial AC power source 2 from the distributed power source 54. Accordingly, the power can be transferred between the power distribution apparatuses 52 connected to the power line 51, the power line 51 also being connected to the commercial AC power source 2. By storing the power in the storage device 57, it is possible to suppress the reverse power flow to the commercial AC power source 2 from the distributed power source 54 of the power distribution apparatus 52.
(2) Between the commercial AC power source 2 and the power distribution part 53 constituted by a plurality of the power distribution apparatuses 52, there is provided the sensor 60 connected to the power line 51 to detect the current. Accordingly, based on the detection results (i.e., the current flowing in the power line 51) of the sensor 60, the storage device 57 is controlled. Thus, the reverse power flow can be suppressed automatically based on the current flowing in the power line 51 (i.e., the current value of the power line 51).
(3) By discharging power from the storage device 57, the discharged power is supplied to at least one of the load devices 6 and 55. Accordingly, since the storage device 57 can also supply the power to the load devices 6 and 55 of the power distribution apparatus 52, it is possible to reduce the power (i.e., purchased power) supplied from the commercial AC power source 2. In addition, by discharging power from the storage device 57, the storage capacity (i.e., available storage capacity which is variable with respect to the maximum storage capacity) of the storage device 57 can be recovered.
(4) On the basis of the discharged power being supplied from the storage device 57, the power supply to the load devices 6 and 55 of specific power distribution apparatuses 52 among the power distribution apparatuses 52 may be limited. Accordingly, it is possible to reduce the power (i.e., purchased power) supplied from the commercial AC power source 2. Specifically, if the amount of the power discharged from the storage device 57 is low, the power supply to the load devices 6 and 55 of the specific power distribution apparatuses 52 is limited. Therefore, it becomes easier for the distributed power source 54 or the storage device 57 to feed the power required for the load devices 6 and 55 other than those in which the power supply is not limited, thereby reducing the power supply from the commercial AC power source 2.
(5) On the basis of the discharged power being supplied from the storage device 57, the power supply to the load devices 6 and 55 of specific power distribution apparatuses 52 among the power distribution apparatuses 52 may be cut off. Accordingly, in addition to the effect described in (4), it is possible to surely reduce the power supply from the commercial AC power source 2.
(6) Each of the power distribution apparatuses 52 is provided in each dwelling unit of the multiple dwelling house. Accordingly, the power can be transferred between the dwelling units of the multiple dwelling house. In addition, as described in (1), it is possible to suppress the reverse power flow from the multiple dwelling house.
(7) The power distribution system 50 is provided with the power meter 29 serving as a power measuring sensor to measure the amount of the power being supplied to each of the power distribution apparatuses 52 from the power line 51. On the basis of the measurement results (the amount of the power being supplied to each of the power distribution apparatuses 52 from the power line 51) of the power meter 29, the transfer of the power between the power distribution apparatuses 52 is managed. Accordingly, the transfer of the power can be managed between the power distribution apparatuses 52 and the sale of electric power can be achieved between the power distribution apparatuses 52.
(8) In addition, based on the information relating to the power consumption of the load devices 6 and 55 and the power supplied by the distributed power source 54 in the power distribution apparatus 52, the transfer of the power between the power distribution apparatuses 52 is managed. Accordingly, the transfer of the power can be finely and minutely managed between the power distribution apparatuses 52 and the sale of electric power can be achieved between the power distribution apparatuses 52.
(9) The control unit 7 for controlling the transfer of the power through the power line 51 is provided in each of the power distribution apparatuses 52, and the power distribution system 50 includes the control apparatus 56 that is connected to communicate with the plural control units 7. Further, based on the measurement results of the power meters 29, the transfer of the power is managed between the power distribution apparatuses 52. In this case, the plural control units 7 are controlled by the control apparatus 56, thereby collectively managing the transfer of power between the power distribution apparatuses 52.
(10) The power distribution apparatus 52 to which the power has been supplied (i.e., the power purchasing system B) is billed based on the supplied power. A difference is set between billing for the amount of the power supplied from the commercial AC power source 2 to the power purchasing system B and billing for the amount of the power supplied from the distributed power source 54 to the power purchasing system B. Therefore, by setting the billing amount for the power supplied from the commercial AC power source 2 to the power purchasing system B to be greater than the billing amount for the power supplied from the distributed power source 54 to the power purchasing system B, the user to be billed can be encouraged to purchase power from the distributed power source 54.
(11) The power distribution system 50 includes the operation panel 40 with the monitor serving as a display device for displaying the billing-related information. Thus, the user to be billed can determine whether to purchase power from which power source of the commercial AC power source 2 and the distributed power source 54 of the power selling system A by referring to the billing-related information displayed on the operation panel 40.
(12) The distributed power source 54 may include multiple types of power sources. The information for distinguishing the power source which has supplied the power among the multiple types of power sources is outputted as data to the control apparatus 56 from the power distribution apparatus 52 (i.e., the power selling system A) having the distributed power source 54 which has supplied the power. Accordingly, the control apparatus 56 can obtain the data and utilize the information for distinguishing the multiple types of power sources in various controls.
(13) The power distribution system to which the power has been supplied (i.e., the power purchasing system B) is billed based on the power supplied from the distributed power source 54. The amount of the power supplied to the power purchasing system B from the distributed power source 54 of the power selling system A is billed differently according to the type of the power source used to supply the power to the power purchasing system B. Accordingly, for example, by setting the billing amount for the power supplied from the distributed power source 54 using the solar cell 3 to be smaller than the billing amount for the power supplied from the distributed power source 54 using the storage battery 16, the user to be billed can be encouraged to purchase power from the distributed power source 54 using the solar cell 3.

### (Second Embodiment)

Next, a second embodiment in which the control of the storage device 57 of the first embodiment is modified will be described. Further, the same reference numerals are assigned to the same components as those of the first embodiment, and a description thereof will be omitted or simplified.

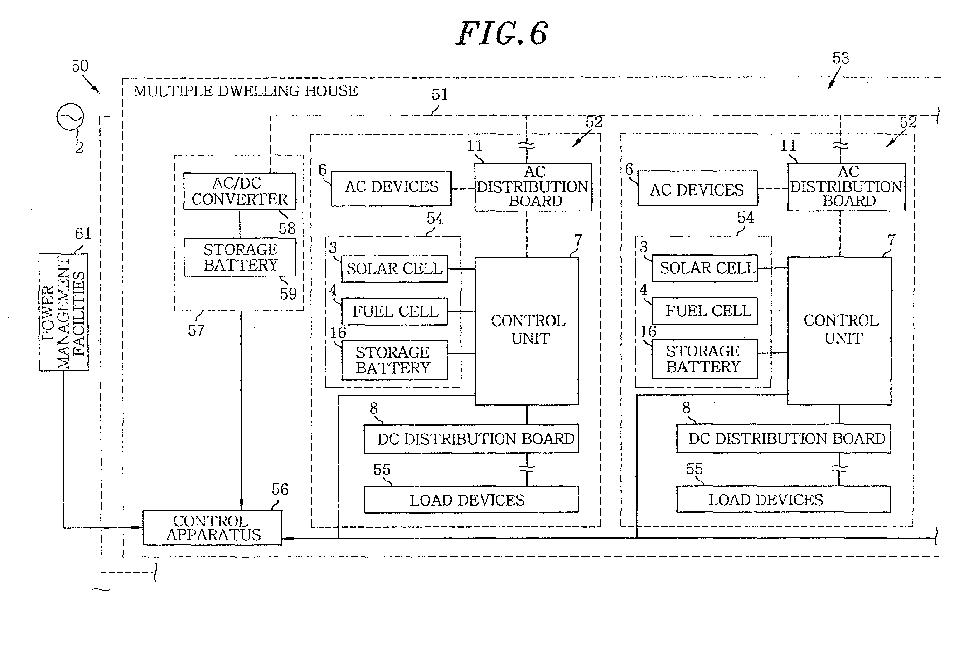

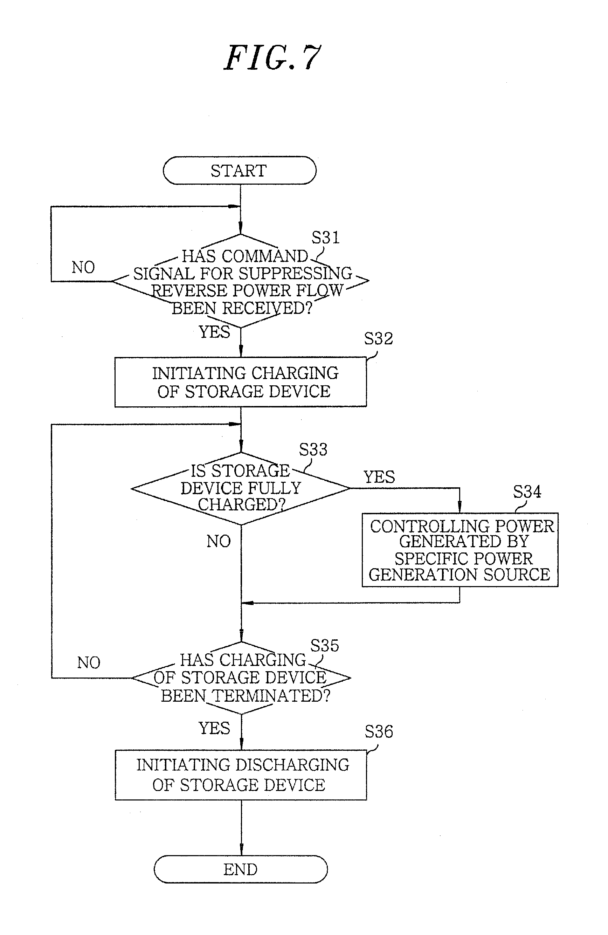

As shown in FIG. 6, in this embodiment, no sensor 60 is provided in the multiple dwelling house, and the control apparatus 56 controls the storage device 57 based on a command signal inputted from the outside of the multiple dwelling house. In other words, the control apparatus 56 is connected to power management facilities 61 of a power company or the like, the control apparatus 56 capable of communicating with the power management facilities 61, and suppressing the reverse power flow according to a command signal from the power management facilities 61. Hereinafter, a flow of the operation of the control apparatus 56 when the reverse power flow is suppressed by the storage device 57 in this embodiment will be described with reference to FIG. 7.

As shown in FIG. 7, first, the control apparatus 56 determines whether the command signal for instructing to suppress the reverse power flow has been received from the power management facilities 61 (step S31). A series of operations subsequent to step S31 shown in FIG. 7 is not performed until it is determined in step S31 that the command signal for instructing to suppress the reverse power flow has been received.

If it is determined in step S31 that the command signal for instructing to suppress the reverse power flow has been received, similarly to step S22, the control apparatus 56 outputs a signal for initiating the storage of power to the storage device 57, and the storage device 57 is operated to initiate the charging (storage of power) (step S32). In the manner as described above, the surplus power is stored in the storage device 57 and, thus, it is possible to suppress the reverse power flow from the distributed power source 54 of the power selling system A to the commercial AC power source 2.

Subsequently, the control apparatus 56 determines whether the storage device 57 is fully charged (step S33). If it is determined in step S33 that the storage device 57 is fully charged, in this embodiment, the control apparatus 56 controls power generation of a specific power generation source (e.g., the solar cell 3 and the fuel cell 4 in the power selling system A) (step S34). Specifically, in step S34, the power generation of the power source which has supplied the surplus power in the power selling system A is limited.

In this way, the overcharging of the storage device 57 is suppressed. In this embodiment, in step S34, the power generations of a plurality of the distributed power sources 54 are limited sequentially based on priorities that are set in advance. Preferably, the priorities may be changed appropriately based on contracts between users of the power distribution apparatuses 52 (i.e., residents of the multiple dwelling house) and a manager of the power distribution apparatuses 52 (i.e., a manager of the multiple dwelling house) or the like.

Subsequently, similarly to step S23, the control apparatus 56 determines whether to terminate the charging of the storage device 57 (step S35). Preferably, the determination on whether to terminate the charging of the storage device 57 in step S23 is made based on whether the reverse power flow will not occur despite the termination of the charging of the storage device 57. If it is determined to terminate the charging of the storage device 57 in step S35, similarly to step S24, the control apparatus 56 controls the storage device 57 to initiate the discharging thereof (step S36).

Further, if it is determined not to terminate the charging of the storage device 57 in step S35, the operations of steps S33 to S35 are repeated. In addition, after performing the operation of step S36, the control apparatus 56 may perform the operations of steps S25 and S26 as described in the first embodiment.

According to the present embodiment, in addition to the effects described in (1) and (6) to (13), the following effects can be obtained.
(14) The storage device 57 is controlled based on the command signal outputted from the power management facilities 61 managing the power of the commercial AC power source 2. Accordingly, in a state where the command signal for instructing to suppress the reverse power flow is not outputted from the power management facilities 61, a power is not charged in the storage device 57, and can be reversely flowed from the power distribution apparatuses 52 to the outside of the multiple dwelling house. This makes the sale of electric power possible.
(15) Based on the charging state of the storage device 57, the power generation of the distributed power source 54 of the power selling system A is limited. Accordingly, if the storage device 57 is fully charged, the power generation of the distributed power source 54 is limited. Thus, it is possible to suppress the reverse power flow while preventing the storage device 57 from being overcharged.
(16) Based on the priorities that are set in advance, the power generations of a plurality of the distributed power sources 54 are limited sequentially. Accordingly, it is possible to control the power generations of a plurality of the distributed power sources 54 in the order desired.

With respect to the present invention as described in the above embodiments, various design changes can be made without deviating from the scope of the present invention. For example, the first and second embodiments described above may be modified as follows, and the following modifications may be carried out in combination with each of the above embodiments.
- In the above-described embodiments, the distributed power source 54 is constituted by the solar cell 3, the fuel cell 4 and the storage battery 16. However, the distributed power source 54 may not include all of them, and may include any power sources other than them.
- In the above-described embodiments, each of the power distribution apparatuses 52 is provided in the dwelling unit of the multiple dwelling house. However, the present invention may be applied to infrastructures other than the multiple dwelling house. Specifically, for example, each of the power distribution apparatuses 52 may be provided in an office, shop or the like.

- In the above-described embodiments, the operation panel 40 equipped with the monitor is a display device for displaying the billing-related information. However, a monitor (not shown) may be provided as a display device separately from the operation panel 40.
- In the above-described embodiments, the power meter 29 is a power measuring meter for measuring the amount of the power being supplied to each of the power distribution apparatuses 52 from the power line 51. However, a power measuring meter may be provided separately from the power meter 29.
- In the above-described embodiments, the control apparatus 56 controls the plural control units 7 to manage the transfer of power between the power distribution apparatuses 52. However, the transfer of power between the power distribution apparatuses 52 may be managed without using the control apparatus 56 as a master management device. That is, any one of the control units 7 may perform the same operation as the control apparatus 56.
- In the above-described embodiments, the control unit 7 is a power supply control device for controlling the transfer of power through the power line 51. However, a device other than the control unit 7 may serve as a power supply control device.

### (Third Embodiment)

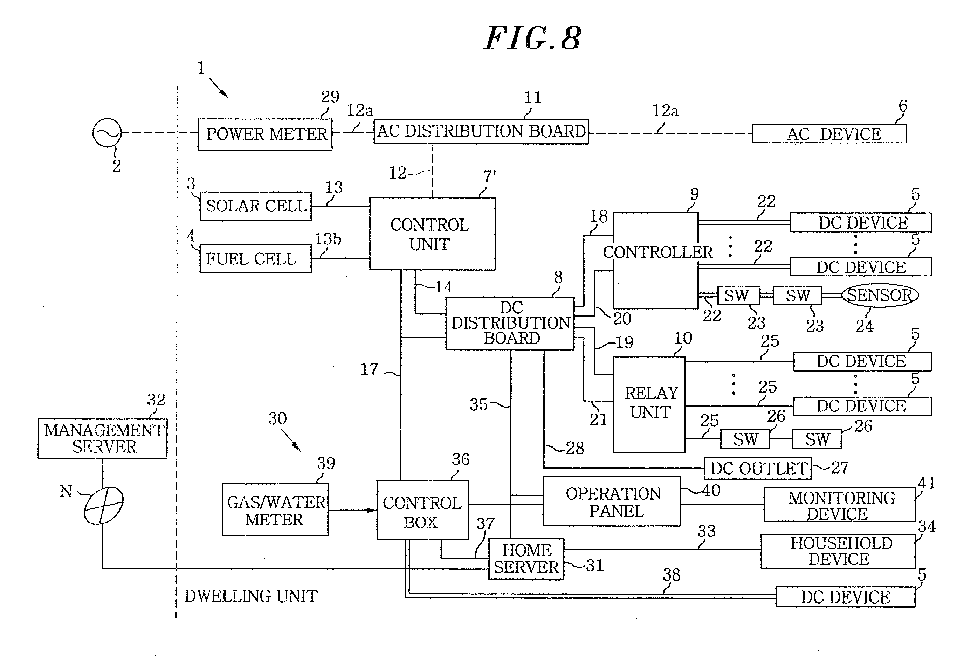

Hereinafter, a third and fourth embodiment of the present invention will be described with reference to FIGS. 8 to 13. In a power distribution systems in accordance with the third and fourth embodiment of the present invention, as shown in FIG. 8, unlike the power distribution system shown FIG. 2 in accordance with the first and second embodiments of the present invention, the control apparatus 56 and the storage battery 16 serving as a distributed power source are not provided, and the control unit 7 has characteristic configuration and function as will be described below. In FIG. 8, the same reference numerals are assigned to the same or similar components as those of FIG. 2, a description thereof will be omitted, and different parts will be mainly described.

In a power distribution system 1 in accordance with the present embodiment, for example, information about the sale of electric power (reverse power flow) is transmitted from the management server 32 to the home server 31 through the network N. The home server 31 outputs the information about the sale of electric power (reverse power flow) to the control unit 7 through the control box 36.

Next, a specific configuration of a control unit 7' in accordance with this embodiment will be described.

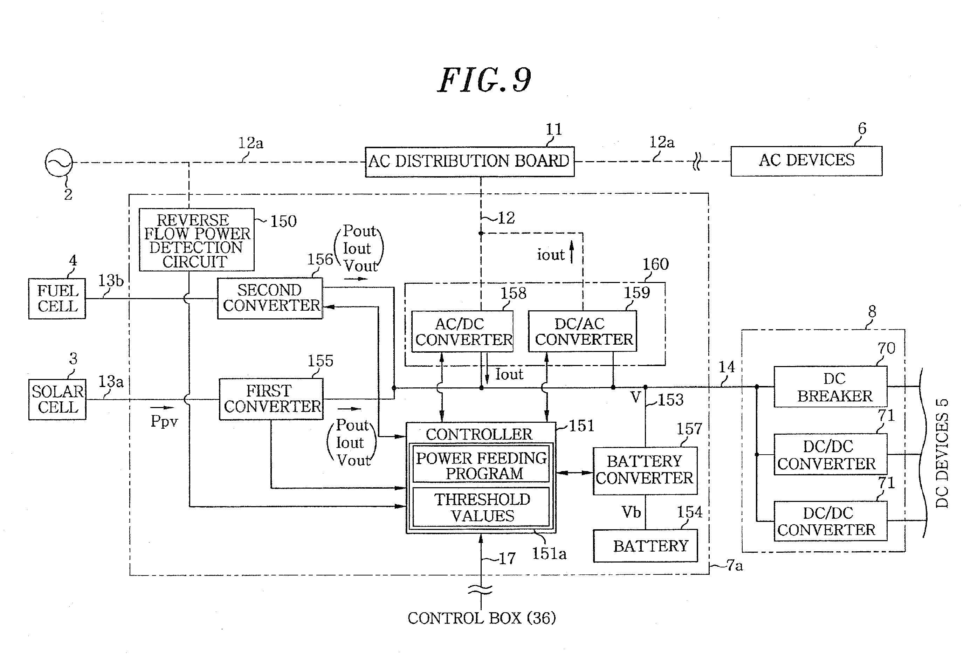

As shown in FIG. 9, the control unit 7' includes, a controller 151, a first DC/DC converter (hereinafter, referred to as "first converter") 155, a second DC/DC converter (hereinafter referred to as "second converter") 156, a battery converter 157, a bi-directional converter 160, a battery 154, and a reverse flow power detection circuit 150.

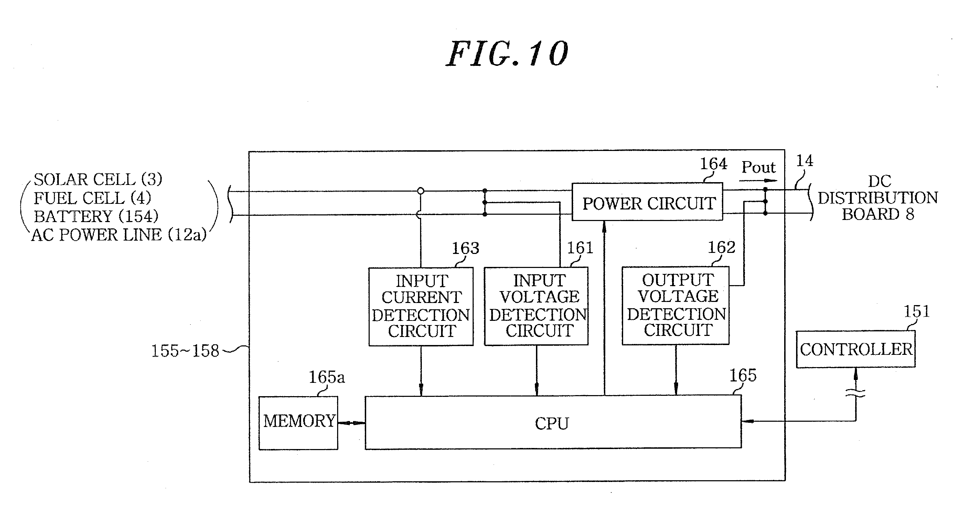

The first converter 155 converts a DC power (solar power Ppv) inputted from the solar cell 3 into a desired DC power, and outputs the converted DC power to the DC distribution board 8. Specifically, the first converter 155 includes, as shown in FIG. 10, an input voltage detection circuit 161 detecting a voltage at a side of the solar cell 3, an output voltage detection circuit 162 detecting a voltage at a side of the DC distribution board 8, an input current detection circuit 163 detecting a current value at the side of the solar cell 3, a power circuit 164 for power conversion, a CPU 165 controlling the power circuit 164, and a non-volatile memory 165a being accessed by the CPU 165.

The CPU 165 appropriately controls the power circuit 164 in accordance with a program stored in the memory 165a. Specifically, according to the program, MPPT control described in the above-mentioned background is executed. In terms of power generation efficiency of the solar cell 3, it is preferable that MPPT control is executed all the time.

The power circuit 164 converts a power supplied from the solar cell 3 into a desired power, and outputs the converted power to the DC distribution board 8, based on a control signal from the CPU 165. According to the MPPT control, as described with reference to FIG. 14 in the above background, the CPU 165 controls an output power Pout (solar power Ppv) of the solar cell to a maximum output power Pmax thereof through the power circuit 164.

An input voltage and input current of the power circuit 164 are detected by the input voltage detection circuit 161 and the input current detection circuit 163, and an output voltage of the power circuit 164 is detected by the output voltage detection circuit 162. These detection results are outputted to the CPU 165. Thus, the CPU 165 determines whether an input power has been properly converted into an output power. Further, the power circuit 164 includes a plurality of switch elements and the like. Further, a command signal regarding the output power Pout of the power circuit 164 is inputted to the CPU 165 from the controller 151.

The second converter 156 converts a DC power inputted from the fuel cell 4 into a desired DC power, and outputs the converted DC power to the DC distribution board 8. A specific configuration of the second converter 156 is almost the same as the first converter 155 shown in FIG. 10. The second converter 156 is different from the first converter 155 in that, as shown in FIG. 10, power generation rules of the fuel cell 4 are stored in the memory 165a of the second converter 156. The power generation rules prescribe a maximum output power, or prohibit a steep change in power generation. By carrying out the power generation according to the power generation rules, it is possible to extend the life of the fuel cell 4 while increasing the power generation efficiency of the fuel cell 4.

The battery converter 157 and the battery 154 are connected to the DC power line 14 via a battery connection line 153. The battery converter 157 converts a power of the DC power line 14 into a desired power and stores in the battery 154, or converts the power charged in the battery 154 into a desired power and discharges it to the DC power line 14. The battery converter 157 is a bi-directional DC/DC converter.

A specific configuration of the battery converter 157 is almost the same as the first converter 155 shown in FIG. 10, except that the battery converter 157 can output a power in both directions toward the battery 154 and the DC power line 14. Further, the battery converter 157 outputs the detection result of the input voltage detection circuit 161 to the controller 151. The controller 151 recognizes a battery voltage Vb of the battery 154 based on the detection result.

The bi-directional converter 160 is provided in a DC/AC connection line 12. The bi-directional converter 160 includes an AC/DC converter 158 and a DC/AC converter 159. The DC/AC converter 159 converts a DC power from the DC power line 14 into an AC power (output current iout), and supplies the converted AC power to the AC power line 12a. Further, the AC/DC converter 158 converts an AC power from the AC power line 12a into a DC power (output current Iout), and supplies the converted DC power to the DC power line 14. The AC/DC converter 158 and the DC/AC converter 159 may convert an input power into a desired output power. A specific configuration of each of the AC/DC converter 158 and the DC/AC converter 159 is almost the same as the first converter 155 shown in FIG. 10 excluding that the power circuit 164 converts power between DC and AC power.

The AC/DC converter 158 is controlled by the controller 151 and also outputs the detection result of the output voltage detection circuit 162 (see FIG. 10) to the controller 151. The controller 151 recognizes a voltage V of the DC power line 14 based on the detection result. In this way, by providing the bi-directional converter 160 in the DC/AC connection line 12, an AC power can be converted into a DC power to be transmitted to the DC power line 14, or a DC power can be converted into an AC power to be transmitted to the AC power line 12a.

In this case, a DC power generated by the solar cell 3 may be supplied to the DC devices 5. Thus, for example, compared to a system in which the power generated by the solar cell 3 needs to be converted into an AC power, power loss in power conversion can be reduced, and transmission efficiency is good. However, since the power generation by the solar cell 3 is influenced by the weather and time, it is difficult to supply stable power to the DC devices 5. On the other hand, since an AC power is generated by, e.g., a power company, stable power transmission from the AC power source 2 can be expected.

Therefore, if the power generated by the solar cell 3 is insufficient, the AC power from the AC power source 2 can be converted into a DC power to be supplied to the DC devices 5, thereby stably supplying the DC power to the DC devices 5. Also, on the contrary, if it is determined that the amount of the power generated by the solar cell 3 exceeds the amount of the power consumed in the DC devices 5, a DC power of the solar cell 3 may be converted into an AC power to be supplied to the AC devices 6. Alternatively, the sale of electric power may be achieved by causing the reverse power flow toward the AC power source 2, i.e., the power company.

The reverse flow power detection circuit 150 detects a power supplied to the AC power line 12a between the AC power source 2 and the AC distribution board 11, particularly, a power reversely flowing to the AC power source 2 from the AC distribution board 11. The detection results are outputted to the controller 151.

The controller 151 recognizes the reverse flow power based on the detection results from the reverse flow power detection circuit 150, and also calculates the amount of the power Wh by time integrating the reverse flow power. In this case, as shown in FIG. 8, the information on the reverse flow power is periodically transmitted from the management server 32 to the control unit 7' through the network N, the home server 31 and the control box 36. The controller 151 receives the information about the reverse flow power through the signal line 17.

The reverse flow of the power is not allowed indefinitely all the time. For example, the reverse flow of the power is prohibited every predetermined period, or the allowable amount of reverse flow power is limited. If the reverse flow of the power is prohibited, it is necessary to prevent the power from reversely flowing. In this case, the allowable amount of the reverse flow power is set as a threshold value Wh1. The information about the reverse flow power includes information such as the threshold value Wh1. The controller 151 updates (stores in a memory 151a) the information such as the threshold value Wh1 whenever receiving the information about the reverse flow power, and performs control based on the latest information afterwards.

The controller 151 prohibits the reverse flow of power or limits the allowable amount of reverse flow power Wh according to the above information. In case of prohibiting the reverse flow of the power, the controller 151 charges the power equivalent to the power detected by the reverse flow power detection circuit 150 in the battery 154 through the battery converter 157 from the DC power line 14. Accordingly, it is possible to prohibit the reverse flow of the power without affecting the voltage V of the DC power line 14.

In case of limiting the amount of reverse flow power Wh, the controller 151 calculates the amount of the power Wh by time integrating the power for a predetermined period of time. Then, when the calculated amount of the power Wh reaches the threshold value Wh1, the controller 151 charges the reverse flow power in the battery 154 through the battery converter 157 in the same manner as described above, thereby limiting the reverse flow of the power. That is, the configuration required to prohibit or limit the reverse flow of the power is the reverse flow power detection circuit 150, the controller 151, the battery converter 157 and the battery 154.

In this case, when the reverse flow power is detected by the reverse flow power detection circuit 150, i.e., during a period from when the amount of the power Wh reaches the threshold value Wh1 until the battery 154 starts charging, the power flows in a reverse direction, but it is negligible in terms of time. Thus, the amount of the power Wh being a function of time also is negligibly small. Further, in order to suppress the reverse flow power due to this time difference, the threshold value Wh1 may be set to be smaller than the allowable amount of reverse flow power.

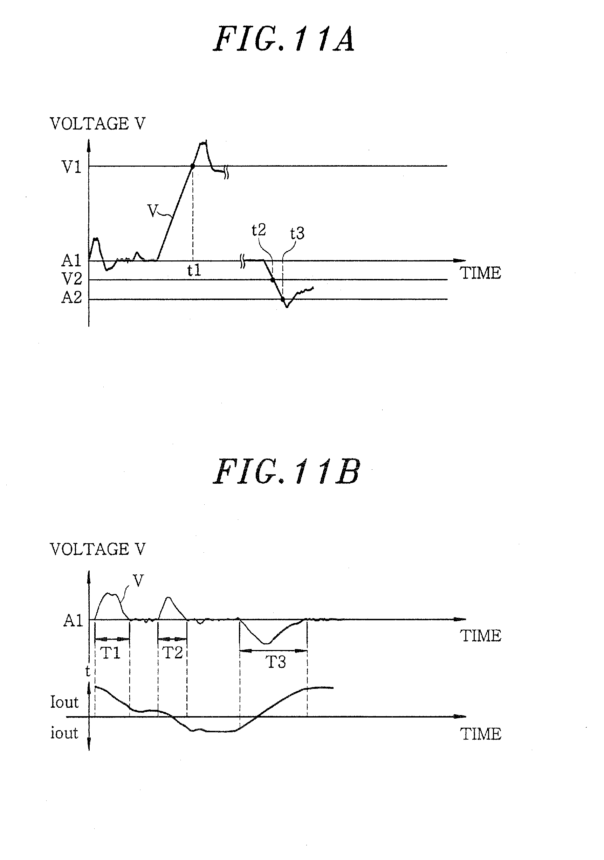

The controller 151 constantly monitors the voltage V of the DC power line 14 through the AC/DC converter 158. Specifically, as shown in FIG. 11A, the controller 151 compares the voltage V with first and second threshold values V1 and V2 and first and second command values A1 and A2 which are stored in its own memory 151a.

For example, if the generated power is greater than the demanded power, the voltage V of the DC power line 14 becomes higher. On the other hand, if the generated power is smaller than the demanded power, the voltage V of the DC power line 14 becomes lower. Based on such characteristics, a balance between supply and demand of the power can be recognized by observing the voltage V of the DC power line 14. When the voltage V of the DC power line 14 is equal to the first command value A1 (reference value), the power supply and demand are in balance. Here, the supplied power is a value obtained by adding/subtracting the power transferred between the AC and DC power systems to/from the power generation.

If the voltage V exceeds the first command value A1, the controller 151 determines that the power supply is greater than the power demand. If the voltage V is less than the first command value A1, the controller 151 determines that the power supply is smaller than the power demand. Further, as shown in FIG. 11B, in a period during which the voltage V exceeds the first command value A1, the controller 151 increases the output current iout through the DC/AC converter 159, or decreases the output current Iout through the AC/DC converter 158.

Specifically, as shown in FIG. 11B, in a period T1 during which the voltage V exceeds the first command value A1, the output current Iout is reduced through the AC/DC converter 158. In this case, since the output current Iout does not reach zero, the DC/AC converter 159 does not output the output current iout. Further, in a period T2 during which the voltage V exceeds the first command value A1, the output current Iout outputted from the AC/DC converter 158 is reduced, and the output current Iout reaches zero.

In this case, if the voltage V still exceeds the first command value A1, the output current iout starts to be outputted from the DC/AC converter 159, and the output current iout increases until the voltage V becomes equal to the first command value A1. When the voltage V is equal to the first command value A1, the output current iout becomes constant. By this control, the voltage V is maintained at the first command value A1.

In a period during which the voltage V is less than the first command value A1, the output current Iout from the AC/DC converter 158 increases, or the output current iout from the DC/AC converter 159 decreases. Specifically, in a period T3 during which the voltage V is less than the first command value A1, the output current iout outputted from the DC/AC converter 159 is reduced.

Accordingly, when the output current iout reaches zero, the output current Iout starts to be outputted from the AC/DC converter 158. The output current Iout from the AC/DC converter 158 increases until the voltage V becomes equal to the first command value A1. When the voltage V is equal to the first command value A1, the output current Iout becomes constant. Through such control, the voltage V is maintained at the first command value A1.

Thus, the solar cell 3 and the fuel cell 4 may generate power appropriately according to their circumstances regardless of the demanded power. Specifically, the solar cell 3 and the fuel cell 4 can always generate power in accordance with the power generation rules. For example, the power generation rules of the solar cell 3 may be the MPPT control. Further, the power generation rules may correspond to control rules.

The first threshold value V1 (upper limit) is set to a value greater than the first command value A1. The first threshold value V1 is set based on the maximum voltage V allowable by the DC power line 14. In a case where the power generation is greater than the power demand, when the surplus power cannot be sufficiently supplied to the AC power line 12a, the voltage V reaches the first threshold value V1. As a case where the power cannot be sufficiently supplied to the AC power line 12a, there may be a case where the power to be transmitted through the AC power line 12a exceeds the maximum output power of the DC/AC converter 159, or a case where the reverse flow of the power is limited. In this case, the voltage V of the DC power line 14 increases.

As shown in FIG. 11A, when the voltage V of the DC power line 14 increases and reaches the first threshold value V1 (time tl), the controller 151 suppresses the output power Pout in the order of the second converter 156 and the first converter 155. Accordingly, the voltage V of the DC power line 14 becomes less than the first threshold value V1, and an excessive rise of the voltage V is suppressed. Further, by firstly suppressing the output power of the second converter 156, it is possible to maintain the power generation efficiency of the solar cell 3 while reducing the fuel consumption of the fuel cell 4.

The second command value A2 (lower limit) is set to be smaller than the first command value A1. Further, the second threshold value V2 is set to a value between the first command value A1 and the second command value A2. The second command value A2 is set based on the voltage V of the DC power line 14 when the power supply does not fulfill the power demand of the DC devices 5. For example, there may be a case where an AC power cannot be supplied to the DC power line 14 from the AC power source 2 through the AC/DC converter 158 due to a power failure or the like. In this case, the voltage V of the DC power line 14 is less than the second command value A2. Further, when the power demand of the DC devices 5 increases rapidly, and it is impossible to immediately respond to this increase due to limitation on the maximum output power of the AC/DC converter 158, the voltage V is less than the second command value A2.

In a state where the voltage V is less than the second command value A2, the power is not sufficiently supplied to the DC devices 5, and the DC devices 5 might not operate normally. The controller 151 controls such that the voltage V becomes equal to the first command value A1. Specifically, the controller 151 controls such that the power is discharged from the battery 154 to the DC power line 14 through the battery converter 157 when the voltage V of the DC power line 14 is reduced and reaches the second command value A2 (time t3 in FIG. 11A). In this case, the battery converter 157 is stopped until the voltage V reaches the second threshold value V2 greater than the second command value A2.

Further, the controller 151 starts the battery converter 157 when the voltage V is reduced and reaches the second threshold value V2. In this case, the battery converter 157 is stopped until the voltage V reaches the second threshold value V2 except a case where the power is charged in the battery 154 in order to prohibit the reverse flow of the power. Further, the battery converter 157 requires a predetermined period of time from initiation of the start-up to completion of the start-up which allows actual supply of the power. The second threshold value V2 is set taking this into account.

That is, the second threshold value V2 is set such that even if the voltage V drops rapidly, the start-up of the battery converter 157 is completed when the voltage V reaches the second command value A2. Accordingly, by starting the battery converter 157 when the voltage V reaches the second threshold value V2, the controller 151 can supply the power to the DC power line 14 through the battery converter 157 when the voltage V reaches the second command value A2 (time t3 of FIG. 11A). Thus, it is possible to more quickly compensate for the insufficient power. Further, since the battery converter 157 is stopped until the voltage V reaches the second threshold value V2, it is possible to eliminate standby power consumption of the battery converter 157 until then.

Moreover, in the case where the voltage V of the DC power line 14 is less than the second command value A2, the power of the battery 154 is supplied to the DC power line 14 to supplement the power supply from the AC power line 12a to the DC power line 14 through the AC/DC converter 158. Accordingly, it is controlled such that the voltage V of the DC power line 14 becomes equal to the second command value A2. Thus, without affecting the power generation of the solar cell 3 and the fuel cell 4 according to the power generation rules, it is possible to compensate for the insufficient power.

Further, the battery converter 157 which has been started when the voltage V reaches the second threshold value V2 is stopped again when the voltage V becomes equal to or greater than the first command value A1. Furthermore, the battery converter 157 may be stopped again when the voltage V becomes equal to or greater than the second threshold value V2.

Further, as shown in FIG. 9, the DC distribution board 8 includes, e.g., a DC breaker 70 and a pair of DC/DC converters 71. The DC breaker 70 is provided on the DC power line 14, and cuts off an abnormal current when the abnormal current flows in the DC power line 14. Accordingly, the abnormal current is prevented from flowing into the DC devices 5. The DC/DC converters 71 step down the voltage of the DC power line 14 to proper voltages to be supplied to the DC devices 5. In this case, the DC breaker 70 can supply a high-voltage power to the DC devices 5 because it does not step down the voltage of the DC power line 14. In this way, by supplying the high-voltage power, it is possible to suppress power loss in transmission.

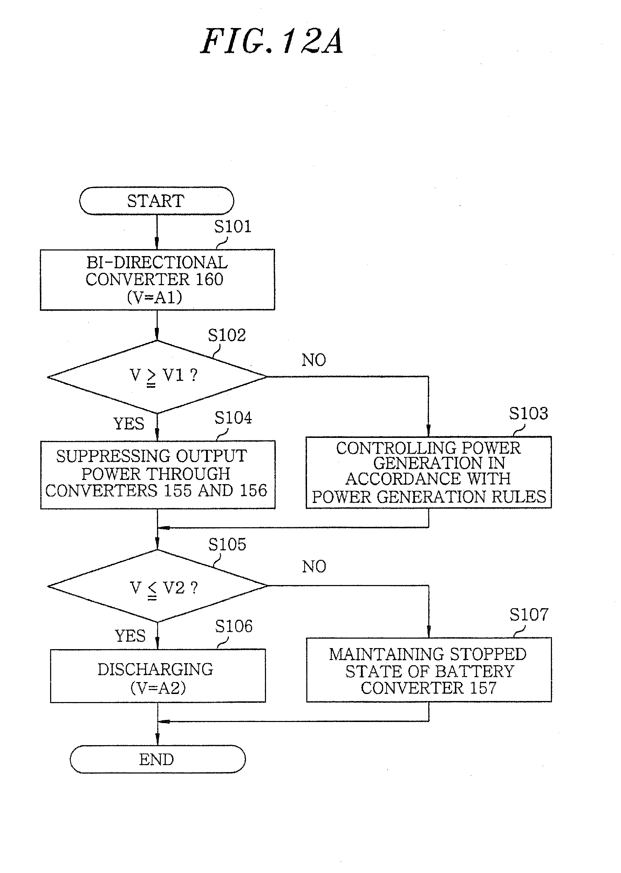

Next, a power-feeding control processing procedure performed by the controller 151 will be described with reference to a flowchart shown in FIG. 12A. This procedure is performed in accordance with a power-feeding program stored in the memory 151a. Further, the power-feeding program is prepared to maintain a balance between power supply and demand.

Control is executed such that the voltage V is maintained at the first command value A1 (step S101). This control is carried out, as described above, through the control of the bi-directional converter 160. Then, it is determined whether the voltage V is equal to or greater than the first threshold value V1 (step S102). If it is determined that the voltage V is less than the first threshold value V1 (NO in step S102), the power generation is carried out in accordance with the power generation rules of the solar cell 3 and the fuel cell 4 through both the converters 155 and 156 (step S103).

In this case, the power generation rules of the solar cell 3 are executed through the MPPT control and the process proceeds to step S105. On the other hand, if it is determined that the voltage V is equal to or greater than the first threshold value V1 (YES in step S102), the output power Pout form the converters 155 and 156 is suppressed (step S104). Then, the process proceeds to step S105.

Then, it is determined whether or not the voltage V is equal to or less than the second threshold value V2 (step S105). If it is determined that the voltage V is equal to or less than the second threshold value V2 (YES in step S105) and the voltage V is less than the second threshold value V2, the voltage V is controlled to become the second command value A2 through the battery converter 157 (step S106). Then, the power-feeding program is ended. On the other hand, if it is determined that the voltage V exceeds the second threshold value V2 (NO in step S105), the process of the power-feeding program is terminated while the battery converter 157 maintains a stopped state.

Further, in this flowchart, step S101 is performed through the control of the bi-directional converter 160, steps S103 and S104 are performed through the control of the first and second converters 155 and 156, and steps S106 and S107 are performed through the control of the battery converter 157.

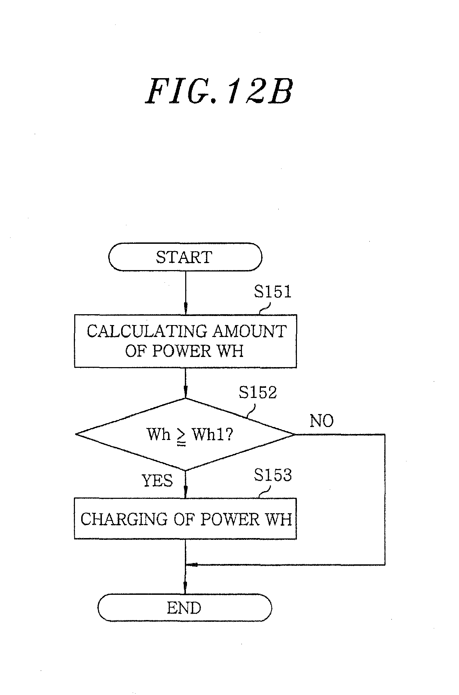

Next, a reverse-flowing power regulation processing procedure performed by the controller 151 will be described with reference to a flowchart shown in FIG. 12B. This procedure is performed in accordance with a reverse-flowing power regulation program stored in the memory 151a. This program is executed separately from the power-feeding program.

First, an amount of a reverse-flowing power Wh is calculated based on the reverse-flowing power detected by the reverse flow power detection circuit 150 (step S151). Then, it is determined whether the calculated amount of the power Wh is equal to or greater than the threshold value Wh1 (step S152).

If the amount of the power Wh is less than the threshold value Wh1 (NO in step S152), the reverse-flowing power regulation program is terminated. It is monitored whether the amount of the power Wh reaches the threshold value Wh1 by repeating the program every predetermined control period.

If the amount of the power Wh is equal to or greater than the threshold value Wh1 (YES in step S152), i.e., if it reaches the maximum allowable amount of the reverse-flowing power, a power is charged to the battery 154 from the DC power line 14 through the battery converter 157 (step S153). At this time, the power equivalent to the reverse-flowing power detected by the reverse flow power detection circuit 150 is charged in the battery 154 from the DC power line 14 through the battery converter 157. Accordingly, it is possible to prevent the reverse power flow after it reaches the maximum allowable amount of the reverse flow power.

In addition, if the reverse power flow is prohibited, it can be assumed that the threshold value Wh1 is set to zero, which leads to YES in step S152, and step S153 is performed.

According to the third embodiment described above, the following effects can be achieved.
(1) The power reversely flowing to the AC power source 2 is adjusted by charging and discharging of the battery 154. Accordingly, the reverse flow power can be adjusted without adjusting the power generated by the solar cell 3 and the fuel cell 4. Thus, the solar cell 3 and the fuel cell 4 can properly generate power regardless of the reverse power flow.
(2) Only the power equivalent to the power reversely flowing to the AC power source 2 is charged to the battery 154 from the DC power line 14 through the battery converter 157. Accordingly, it is possible to prohibit the reverse power flow without adjusting the power generated by the solar cell 3 and the fuel cell 4.
(3) By controlling the bi-directional converter 160 such that the voltage V of the DC power line 14 is equal to the first command value A1, it is possible to make the power supply and demand in balance. In other words, when the voltage V of the DC power line 14 is equal to the first command value A1, the power supply and demand are in balance. Specifically, if the voltage V of the DC power line 14 exceeds the first command value A1, the output current iout from the DC/AC converter 159 is increased or the output current Iout from the AC/DC converter 158 is decreased. Further, if the voltage V of the DC power line 14 is less than the first command value A1, the output current iout from the DC/AC converter 159 is decreased or the output current Iout from the AC/DC converter 158 is increased. Therefore, even if there is an imbalance between power generation and power demand, there is no need to adjust the power generated by the solar cell 3 and the fuel cell 4. Thus, regardless of the power demand of the DC devices 5, the solar cell 3 and the fuel cell 4 can properly generate power.
(4) When the voltage V of the DC power line 14 becomes equal to or greater than the first threshold value V1, it is controlled such that the voltage V is less than the first threshold value V1. That is, the power generated by the solar cell 3 and the fuel cell 4 is suppressed through both the converters 155 and 156 by the controller 151, and an increase in the voltage V of the DC power line 14 is suppressed. Accordingly, overpower is prevented from occurring in the power distribution system 1, thereby enhancing the safety of the system 1.
(5) When the voltage V of the DC power line 14 becomes equal to or less than the second command value A2, the power is discharged to the DC power line 14 from the battery 154. Here, the second command value A2 is set based on the voltage V of the DC power line 14 when the power supply does not fulfill the power demand. As a case where the voltage V of the DC power line 14 is equal to or less than the second command value A2, for example, there may be a case where the power cannot be supplied from the AC power line 12a to the DC power line 14 through the AC/DC converter 158 due to a power failure or the like. Even in this case, the power is discharged to the DC power line 14 from the battery 154 through the battery converter 157. Thus, while maintaining the power generation of the solar cell 3 and the fuel cell 4 in accordance with the power generation rules, the power can be more stably supplied to the DC devices 5.
(6) When the voltage V of the DC power line 14 becomes less than the second threshold value V2, the battery converter 157 is started. In this way, since the battery converter 157 can be stopped until the voltage V of the DC power line 14 becomes less than the second threshold value V2, it is possible to reduce the operating power of the battery converter 157. Further, by starting the battery converter 157 before the voltage V becomes equal to or less than the second command value A2, the battery converter 157 can immediately discharge the power of the battery 154 to the DC power line 14 when the voltage V becomes equal to or less than the second command value A2. Thus, it is possible to more quickly compensate for the lack of power supply.
(7) It is possible to determine whether the power supply and demand are in balance based on the voltage V of the DC power line 14 detected through the AC/DC converter 58. Further, the charging and discharging of the battery 154 are controlled such that the voltage V of the DC power line 14 is equal to the first command value A1, thereby making the power supply and demand in balance. In this way, the controller 151 can easily make the power supply and demand in balance by controlling the charging and discharging of the battery 154.

Here, for example, a configuration in which the controller respectively receives the power to be consumed in the load devices and the power generated by the power generation device, and controls charging and discharging of the battery based on the received power according to a predetermined algorithm stored therein may be considered. However, compared to this configuration, in the present embodiment, it is not necessary to communicate with the load devices or the power generation device. Also, since only feedback control is performed by observing the voltage V of the DC power line 14, it is possible to omit complicated control associated with the communications. Thus, for example, it is possible to instantaneously respond to power imbalance due to steep variation in solar radiation of the solar cell 3, or sudden change in load caused by turning ON/OFF of the DC devices 5.

### (Fourth Embodiment)

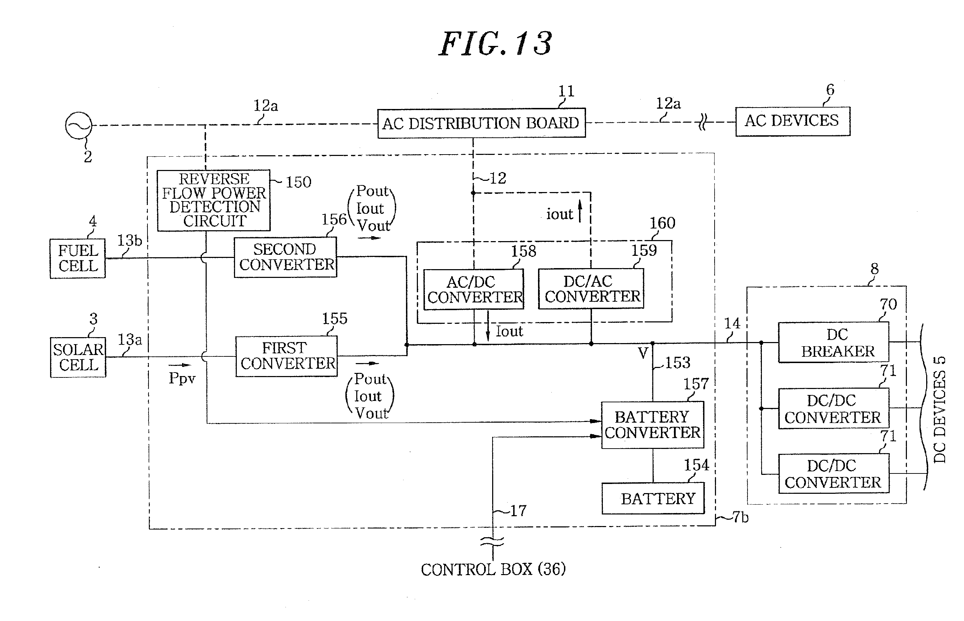

Hereinafter, a fifth embodiment of the present invention will be described with reference to FIG. 13. A power distribution system of the present embodiment is different from the system of the fourth embodiment in that the controller 151 is omitted and the functions of the controller 151 are distributed to the converters 155 to 159 (accurately, the CPUs 165 thereof). A description will be given below focusing on the differences between the third and fourth embodiments.

Each of the converters 155 to 158 recognizes the voltage V of the DC power line 14 through its own output voltage detection circuit 162 (see FIG. 10). Further, the DC/AC converter 159 recognizes the voltage V of the DC power line 14 through the input voltage detection circuit 161. Further, each of the first converter 155 and the second converter 156 stores the first threshold value V1 in its own memory 165a. Then, both the converters 155 and 156 suppress the output thereof when the voltage V reaches the first threshold value V1.

Further, each of the AC/DC converter 158 and the DC/AC converter 159 constituting the bi-directional converter 160 stores the first command value A1 in its own memory 165a. Further, the AC/DC converter 158 decreases the output current iout through the DC/AC converter 159, or increases the output current Iout through the AC/DC converter 158 when the voltage V is less than the first command value A1. Further, the DC/AC converter 159 increases the output current iout through the DC/AC converter 159, or decreases the output current Iout through the AC/DC converter 158 when the voltage V exceeds the first command value A1. Thus, it is controlled such that the voltage V is equal to the first command value A1 as in the above-described embodiment.

In addition, the battery converter 157 stores the second threshold value V2 and the second command value A2 in its own memory 165a. The battery converter 157 is started when the voltage V reaches the second threshold value V2, and performs control such that a power is discharged to the DC power line 14 from the battery 154 and the voltage V becomes equal to the second command value A2 when the voltage V is less than the second command value A2.

Further, the battery converter 157 recognizes the threshold value Wh1 included in the information about the reverse-flowing power which is obtained through the signal line 17. Further, the battery converter 157 calculates the amount of the reverse-flowing power Wh based on the reverse-flowing power outputted from the reverse flow power detection circuit 150. Further, as in the first embodiment, when the amount of the power Wh reaches the threshold value Wh1, the battery converter 157 charges the battery 154 by only the power equivalent to the reverse-flowing power, thereby prohibiting the reverse flow of the power.

According to the embodiment as described above, in addition to the effects (1) to (7) of the third embodiment, the following effects can be achieved.

(8) The controller 151 of the first embodiment can be omitted. Accordingly, it is possible to achieve a simpler configuration of the control unit 7, and also suppress the costs associated with the controller 151. Further, the converters 155 to 158 can perform power generation based on the threshold and command values in accordance with their own power generation rules without communicating with each other, and, as in the first embodiment, a balance between the power supply and demand can be achieved. Further, since the communications between the converters 155 to 158 is unnecessary, communications-related processing is unnecessary. Consequently, it is possible to more quickly achieve equilibrium of power supply and demand. Further, since each of the converters 155 to 158 is configured independently, it is possible to easily update and expand the system. Specifically, if needed, for example, the system can be updated by exchanging each of the converters 155 to 158.

Further, the battery converter 157 may prohibit the reverse power flow, or limit the amount of a reversely-flowing power Wh as in the third embodiment.

Further, the above-described embodiment may be modified appropriately as follows.

• In the third embodiment, the controller 151 performs the control of the voltage V through each of the converters 155 to 159 by executing the power feeding program in accordance with the flowchart shown in FIG. 12A. However, the controller 151 may execute different programs through the converters 155 to 159. In this case, in the flowchart of FIG. 12A, step S101, steps S102 to S104, and steps S105 to S107 are performed in accordance with processing procedures of programs independently of each other.

Specifically, the controller 151 constantly performs the processing of step S101 through the bi-directional converter 160. At the same time, every predetermined period, the controller 151 performs the processing of steps S102 to S104 through both the converters 155 and 156, and also performs the processing of steps S105 to S107 through the battery converter 157. In the second embodiment, the bi-directional converter 160, the converters 155 and 156, and the battery converter 157 execute different programs as described above.
- In the third and fourth embodiments, in case of prohibiting the reverse flow of the power, the power equivalent to the reverse-flowing power detected by the reverse flow power detection circuit 150 is charged in the battery 154 from the DC power line 14 through the battery converter 157. However, part of the reverse-flowing power detected by the reverse power detection circuit 150 may be charged in the battery 154. In this case, the reverse flow power can be adjusted arbitrarily.
- In the third embodiment, the controller 151 calculates the amount of the reverse-flowing power Wh based on the detection results of the reverse flow power detection circuit 150. However, the reverse flow power detection circuit 150 may calculate the amount of the reverse flow power Wh. In this case, the reverse flow power detection circuit 150 directly calculates the amount of reverse flow power based on the detected power. Also in the second embodiment, similarly, the reverse flow power detection circuit 150 may calculate the amount of the reverse flow power Wh.

- In the third and fourth embodiments, the reverse power flow is allowed in a predetermined period of time. However, the power distribution system 1 may be configured such that the reverse power flow is not allowed at all. In this case, the controller 151 or the battery converter 157 always prohibits the reverse power flow.
- In the third embodiment, the controller 151 recognizes the voltage V through the AC/DC converter 158. However, the controller 151 may recognize the voltage V through any other converter, e.g., the battery converter 157. Further, a voltage detection circuit may be provided separately from the converter.
- In the third and fourth embodiments, the fuel cell 4 and the solar cell 3 are provided as a DC power generation device, but another DC power generation device is provided as long as they can generate DC power. For example, the DC power generation device may be a storage battery, wind power generation device and the like. The storage battery and the wind power generation device also have power generation rules appropriate for themselves in terms of power generation efficiency or life. In addition, the DC power generation device may be configured using only the solar cell 3 or only the fuel cell 4.

- In the third and fourth embodiments, the first and second threshold values V1 and V2 and the first and second command values A1 and A2 are set, but these may be omitted. Even in this case, the reverse flow of the power can be regulated while maintaining power generation in accordance with the power generation rules of the fuel cell 4 and the solar cell 3 by the battery 154, the battery converter 157 and the reverse power detection circuit 150.

While the invention has been shown and described with respect to the embodiments, it will be understood by those skilled in the art that various changes and modification may be made without departing from the scope of the invention as defined in the following claims.

Further features, aspects and embodiments are provided below in the following items:
Item 1. A power distribution system comprising:
   a DC power system in which a DC power generated by a DC power generation device is supplied to a DC load via a DC supply line;
   an AC power system which is linked to the DC power system, for supplying an AC power from an AC power source via an AC supply line;
   a battery which is connected to the DC supply line; and
   a control unit which adjusts reverse power flowing to the AC power source by charging/discharging the battery.
Item 2. The power distribution system of item 1, further comprising:
   a bi-directional converter which converts the AC power from the AC supply line into a DC power, and converts the DC power from the DC supply line into an AC power;
   a DC/DC converter connected to the DC supply line, which converts the DC power inputted from the DC power generation device into a desired DC power in accordance with predetermined control rules stored in the DC/DC converter, and supplies the converted DC power to the DC load;
   a charging/discharging circuit provided between the DC supply line and the battery, which charges the battery with a power from the DC supply line and discharges the power from the battery to the DC supply line; and
   a reverse flowing power detection circuit which is connected to the AC supply line and detects the power reversely flowing to the AC power source,
   wherein the control unit adjusts the reverse flowing power by controlling the charging/discharging circuit to charge/discharge the battery based on detection results of the reverse flowing power detection circuit.
Item 3. The power distribution system of item 2, wherein the control unit prevents a reverse flow of the power by charging the battery with a power from the DC supply line by the charging/discharging circuit, the power being equivalent to the reverse flowing power detected by the reverse flowing power detection circuit.
Item 4. The power distribution system of item 2 or 3, further comprising a voltage detection unit for detecting a voltage of the DC supply line, wherein the control unit controls the bi-directional converter such that the voltage of the DC supply line maintains a reference value.
Item 5. The power distribution system of item 4, wherein, when the voltage of the DC supply line detected by the voltage detection unit becomes an upper limit or more, the upper limit being greater than the reference value, the control unit controls the DC/DC converter to suppress the power generated by the DC power generation device such that the voltage of the DC supply line becomes less than the upper limit.
Item 6. The power distribution system of item 4 or 5, wherein when the voltage of the DC supply line detected by the voltage detection unit becomes equal to or less than a lower limit, the lower limit being smaller than the reference value, the control unit discharges the power from the battery to the DC supply line by the charging/discharging circuit.
Item 7. The power distribution system of item 6, wherein, when the voltage of the DC supply line detected by the voltage detection unit is equal to or less than a threshold value between the reference value and the lower limit, the control unit starts the charging/discharging circuit.
Item 8. A power distribution system comprising:
   a DC power system in which a DC power generated by a DC power generation device is supplied to a DC load via a DC supply line;
   an AC power system which is linked to the DC power system and in which an AC power from an AC power source is supplied via an AC supply line;
   a bi-directional converter which converts an AC power from the AC supply line into a DC power, and converts a DC power from the DC supply line into an AC power;
   a DC/DC converter which is connected to the DC supply line, converts the DC power inputted from the DC power generation device into a desired DC power according to predetermined control rules stored in the DC/DC converter, and supplies the converted DC power to the DC load;
   a battery which is connected to the DC supply line; and
   a charging/discharging circuit which is provided between the DC supply line and the battery, for charging the battery with a power from the DC supply line and discharging a power from the battery to the DC supply line,
   wherein the bi-directional converter stores a reference value, and, when a voltage of the DC supply line deviates from the reference value, controls a power outputted to the DC supply line and the AC supply line such that the voltage of the DC supply line is equal to the reference value,
   wherein the DC/DC converter stores an upper limit greater than the reference value, and, when the voltage of the DC supply line becomes equal to or greater than the upper limit, controls a power outputted to the DC supply line such that the voltage of the DC supply line becomes less than the upper limit, and
   wherein the charging/discharging circuit stores a lower limit smaller than the reference value, and, when the voltage of the DC supply line becomes less than the lower limit, controls charging and discharging of the battery such that the voltage of the DC supply line is equal to the lower limit.
Item 9. A power distribution system comprising: a plurality of power distribution apparatuses, each having a distributed power source provided in a power line connected to a commercial power source; and a storage device connected to the power line for storing a power flowing to the commercial power source from the distributed power source.
Item 10. The power distribution system of item 9, wherein each of the power distribution apparatuses includes at least one load device to which the power is supplied, and a power can be supplied to the load devices of the remaining power distribution apparatuses from the distributed power source of at least one of the power distribution apparatuses.
Item 11. The power distribution system of item 10, further comprising: a sensor connected to the power line between the commercial power source and the power distribution apparatuses, for detecting a current flowing in the power line, wherein the storage device is controlled based on detection results of the sensor.
Item 12. The power distribution system of item 10 or 11, wherein the storage device is controlled based on a command signal outputted from power management facilities for managing power of the commercial power source.
Item 13. The power distribution system of any one of items 10 to 12, wherein the storage device is discharged to supply a power to the at least one load device.
Item 14. The power distribution system of item 13, wherein a power supply to the load device of a specific power distribution apparatus among the power distribution apparatuses is limited based on the power discharged from the storage device.
Item 15. The power distribution system of item 14, wherein a power supply to the load device of a specific power distribution apparatus among the plurality of power distribution apparatuses is cut off based on the power being discharged from the storage device.
Item 16. The power distribution system of any one of items 10 to 15, wherein power generation of the distributed power source is limited based on a charging state of the storage device.
Item 17. The power distribution system of item 16, wherein power generations of a plurality of the distributed power sources are limited sequentially based on priorities that are set in advance.
Item 18. The power distribution system of any one of items 10 to 17, wherein each of the power distribution apparatuses is provided in each dwelling unit of a multiple dwelling house.
Item 19. The power distribution system of any one of items 10 to 18, further comprising a power measuring sensor for measuring an amount of a power being supplied to each of the power distribution apparatuses from the power line, wherein transfer of the power between the power distribution apparatuses is controlled based on measurement results of the power measuring sensor.
Item 20. The power distribution system of item 19, wherein the transfer of the power between the power distribution apparatuses is controlled based on information relating to a power consumed in the load device and a power supplied from the distributed power source of each of the power distribution apparatuses.
Item 21. The power distribution system of item 19 or 20,
   wherein the power distribution apparatus further includes a power supply control unit for controlling transfer of a power through the power line,
   further comprising a controller connected to communicate with the power supply control units, for controlling the power supply control units to manage the transfer of the power between the power distribution apparatuses based on the measurement results of the power measuring sensor.
Item 22. The power distribution system of any one of items 19 to 21, wherein, when a power is supplied to the power distribution apparatus, the power distribution apparatus is billed based on an amount of the power supplied to the power distribution system, and a difference is set between billing for an amount of a power supplied to the power distribution apparatus from the commercial power source and billing for the amount of the power supplied to the power distribution apparatus from the distributed power source.
Item 23. The power distribution system of item 22, further comprising a display device for displaying billing-related information.
Item 24. The power distribution system of any one of items 19 to 24,
   wherein the distributed power source includes multiple types of power sources, and
   wherein the power distribution apparatus having the distributed power source which has supplied a power outputs information for distinguishing the type of the power source which has supplied the power as data.
Item 25. The power distribution system of item 24, wherein, when the power distribution apparatus to which the power has been supplied is billed based on the power supplied to the power distribution apparatus from the distributed power source, the amount of the power supplied to the power distribution apparatus from the distributed power source is billed differently according to the type of the power source used to supply the power to the power distribution apparatus.

## Claims

1. A power distribution system (50) comprising: a plurality of power distribution apparatuses (52), each having a distributed power source (54) provided in a power line (51) connected to a commercial power source (2); and a storage device (57) connected to the power line (51) for storing a power flowing to the commercial power source from the distributed power source (54).

2. The power distribution system (50) of claim 1, wherein each of the power distribution apparatuses (52) includes at least one load device (6, 55) to which the power is supplied, and a power can be supplied to the load devices (6, 55) of the remaining power distribution apparatuses (52) from the distributed power source (54) of at least one of the power distribution apparatuses (52).

3. The power distribution system (50) of claim 2, further comprising: a sensor (60) connected to the power line (51) between the commercial power source (2) and the power distribution apparatuses (52), for detecting a current flowing in the power line (51), wherein the storage device (57) is controlled based on detection results of the sensor (60).

4. The power distribution system (50) of claim 2 or 3, wherein the storage device (57) is controlled based on a command signal outputted from power management facilities for managing power of the commercial power source (2).

5. The power distribution system (50) of any one of claims 2 to 4, wherein the storage device (57) is discharged to supply a power to the at least one load device (6, 55).

6. The power distribution system (50) of claim 5, wherein a power supply to the load device (6, 55) of a specific power distribution apparatus among the power distribution apparatuses (52) is limited based on the power discharged from the storage device (57).

7. The power distribution system (50) of claim 6, wherein a power supply to the load device (6, 55) of a specific power distribution apparatus among the plurality of power distribution apparatuses (52) is cut off based on the power being discharged from the storage device (57).

8. The power distribution system (50) of any one of claims 2 to 7,
wherein power generation of the distributed power source (54) is limited based on a charging state of the storage device (57); and/or
wherein power generations of a plurality of the distributed power sources (54) are limited sequentially based on priorities that are set in advance.

9. The power distribution system (50) of any one of claims 2 to 8, wherein each of the power distribution apparatuses (52) is provided in each dwelling unit of a multiple dwelling house.

10. The power distribution system (50) of any one of claims 2 to 9, further comprising a power measuring sensor (29) for measuring an amount of a power being supplied to each of the power distribution apparatuses (52) from the power line (51), wherein transfer of the power between the power distribution apparatuses (52) is controlled based on measurement results of the power measuring sensor (29).

11. The power distribution system (50) of claim 10, wherein the transfer of the power between the power distribution apparatuses (52) is controlled based on information relating to a power consumed in the load device (6, 55) and a power supplied from the distributed power source (54) of each of the power distribution apparatuses (52).

12. The power distribution system (50) of claim 10 or 11,
wherein the power distribution apparatus further includes a power supply control unit (7) for controlling transfer of a power through the power line (51),
further comprising a controller connected to communicate with the power supply control units (7), for controlling the power supply control units (7) to manage the transfer of the power between the power distribution apparatuses (52) based on the measurement results of the power measuring sensor.

13. The power distribution system (50) of any one of claims 11 to 12, wherein, when a power is supplied to the power distribution apparatus (52), the power distribution apparatus (52) is billed based on an amount of the power supplied to the power distribution system, and a difference is set between billing for an amount of a power supplied to the power distribution apparatus (52) from the commercial power source (2) and billing for the amount of the power supplied to the power distribution apparatus (52) from the distributed power source (54).

14. The power distribution system (50) of claim 13, further comprising a display device (40) for displaying billing-related information.

15. The power distribution system (50) of any one of claims 10 to 14,
wherein the distributed power source (54) includes multiple types of power sources, and
wherein the power distribution apparatus (52) having the distributed power source (54) which has supplied a power outputs information for distinguishing the type of the power source which has supplied the power as data.

16. The power distribution system (50) of claim 15, wherein, when the power distribution apparatus (52) to which the power has been supplied is billed based on the power supplied to the power distribution apparatus (52) from the distributed power source (54), the amount of the power supplied to the power distribution apparatus (52) from the distributed power source (54) is billed differently according to the type of the power source used to supply the power to the power distribution apparatus (52).
